# EUROPEAN PATENT APPLICATION

(11) **EP 4 796 456 A1**
(43) Date of publication of application: **26.08.2026**
(21) Application number: 24881095.4
(22) Date of filing: 09.07.2024
(51) Int. Cl.: B65D 90/00, H01M 50/244, B65D 88/74

(54) **CONTAINER, ENERGY STORAGE APPARATUS, ENERGY STORAGE DEVICE, ENERGY STORAGE SYSTEM, AND CHARGING NETWORK**

(30) Priority: 24.10.2023 CN 202322858858 U; 08.04.2024 WO PCT/CN2024/086600; 08.04.2024 WO PCT/CN2024/086624
(71) Applicant: Contemporary Amperex Technology Co., Limited, Ningde, Fujian 352100 (CN)
(72) Inventor: ZHANG, Mingliang, Ningde, Fujian 352100 (CN); SU, Haibin, Ningde, Fujian 352100 (CN); PENG, Haoran, Ningde, Fujian 352100 (CN); WU, Kai, Ningde, Fujian 352100 (CN); YU, Dongxu, Ningde, Fujian 352100 (CN); LIU, Chen, Ningde, Fujian 352100 (CN); WANG, Guotao, Ningde, Fujian 352100 (CN); MENG, Kai, Ningde, Fujian 352100 (CN); LI, Jiaqi, Ningde, Fujian 352100 (CN); YANG, Jiandong, Ningde, Fujian 352100 (CN)
(74) Representative: Kraus & Lederer PartGmbB
(86) International application number: PCT/CN2024/104575
(87) International publication number: WO 2025/086722

(57) **Abstract**

The present application discloses a container, an energy storage apparatus, an energy storage device, an energy storage system, and a charging network. The energy storage apparatus comprises containers, the number of containers is m, m≥ 2, and the m containers are arranged in the height direction of the containers. The dimensions of the containers in the length direction thereof are consistent with the dimensions of standard containers in the length direction, the dimensions of the containers in the width direction thereof are consistent with the dimensions of the standard containers in the width direction, the dimension of one container in the height direction is smaller than the dimension of one standard container in the height direction, and the sum of dimensions of adjacent ml containers among the m containers in the height direction is equal to the sum of dimensions of n standard containers in the height direction. The dimensions of the ml containers in the height direction are equal to the dimensions of the n standard containers in the height direction, such that the space occupied by the ml containers when stacked is the same as the space occupied by the n standard containers, improving the utilization of container placement space, and reducing the transportation cost of the containers, thereby reducing the use costs of energy storage apparatuses.

## Description

### CROSS-REFERENCE TO RELATED APPLICATIONS

The present application claims priority to Chinese patent application No. 202322858858.9, filed on October 24, 2023 and entitled "ENERGY STORAGE APPARATUS AND CONTAINER THEREOF", international patent application No. PCT/CN2024/086600, filed on April 08, 2024 and entitled "ENERGY STORAGE CONTAINER", and international patent application No. PCT/CN2024/086624, filed on April 08, 2024 and entitled "ENERGY STORAGE CONTAINER", the entire contents of which are incorporated herein by reference.

### TECHNICAL FIELD

The present application relates to the technical field of batteries, and in particular, to a container, an energy storage apparatus, an energy storage device, an energy storage system, and a charging network.

### BACKGROUND

With the rapid development of technology, electric energy has become an indispensable energy source in people work and daily life. To ensure a smooth supply of electric energy to realize normal work and daily activities, energy storage apparatuses are needed. As apparatuses for cyclically storing and releasing the electric energy, the energy storage apparatuses can store the electric energy by charging or supply the stored electric energy to electrical apparatuses by discharging. The energy storage apparatuses are widely used in the fields of industrial power supply, household power supply, temporary power supply, mobile power supply, wind power generation, solar power generation, energy storage power stations, etc.

In the development of the energy storage apparatuses, besides improving their performance, how to reduce their use cost is also an issue that cannot be ignored. Therefore, how to reduce the use cost of the energy storage apparatuses is a technical problem that continues to be relieved in energy storage technology.

### SUMMARY OF THE INVENTION

The present application provides a container, an energy storage apparatus, an energy storage device, an energy storage system, and a charging network, so that the use costs of the energy storage apparatus can be reduced.

In a first aspect, embodiments of the present disclosure provide an energy storage apparatus, and the energy storage apparatus includes containers and a control compartment. m containers are provided, where m≥2, the m containers are arranged in a height direction of the container, the container includes a container body and a plurality of battery cells, and the plurality of battery cells are accommodated in the container body. The control compartment includes a compartment body, a control module, and a thermal management module. The control module and the thermal management module are accommodated in the compartment body, and the control module and the thermal management module are both connected to the container. The control module is configured to perform electrical control on the battery cell, and the thermal management module is configured to manage temperature of the battery cell. A size of the container in a length direction thereof is consistent with a size of a standard container in the length direction, a size of the container in a width direction thereof is consistent with a size of the standard container in the width direction, a size of one container in the height direction is less than a size of the standard container in the height direction, and a sum of sizes of m1 containers in the m containers in the height direction is equal to a sum of sizes of n standard containers in the height direction.

In the above technical solution, the size of the container in the length direction and the size of the container in the width direction are both consistent with those of the standard container, thereby ensuring that a horizontal area occupied by the container during transportation is consistent with that of the standard container. The sizes of the m1 containers in the height direction are the sizes of the n standard containers in the height direction, which means that the space occupied by the m1 containers when stacked is the same as that occupied by the n standard containers. This improves the utilization rate of the space where the container is placed, helps to make full use of an available space in the height direction during transportation, reduces space waste during transportation of the container, and reduces the transportation costs of the container and the energy storage apparatus using the container, thereby reducing the use costs of the energy storage apparatus.

In some embodiments, m1=2, and n=1. By setting the heights of two containers as the height of one standard container, when a plurality of containers in the energy storage apparatus are transported, two adjacent containers can be stacked in the height direction, so that the two containers can right occupy the space to be occupied by one standard container, thereby improving the utilization rate of the space where the container is placed and helping to reduce the transportation costs of the container.

In some embodiments, m1=3, and n=1. By setting the heights of three containers as the height of one standard container, when a plurality of containers in the energy storage apparatus are transported, three adjacent containers can be stacked in the height direction, so that the three containers can right occupy the space to be occupied by one standard container, thereby improving the utilization rate of the space where the container is placed and helping to reduce the transportation costs of the container.

In some embodiments, m1=3, and n=2. By setting the heights of three containers as the heights of two standard containers, when a plurality of containers in the energy storage apparatus are transported, three adjacent containers can be stacked in the height direction, so that the three containers can right occupy the space to be occupied by two standard containers, thereby improving the utilization rate of the space where the container is placed and helping to reduce the transportation costs of the container.

In some embodiments, at least part of the control compartment and the container are arranged in the height direction. By arranging at least part of the control compartment and the container in the height direction, the area occupied by the container in a horizontal direction can be reduced, thereby improving the space utilization rate of the energy storage apparatus.

In some embodiments, in the height direction, the control compartment is located between two adjacent containers. The control compartment is located between two adjacent containers, which helps the control module and the thermal management module of the control compartment to be connected to the containers on both sides of the control compartment with shorter lines.

In some embodiments, in the height direction, the control compartment is located at a bottom of a bottommost container. The control compartment is located at the bottom of the bottommost container, which makes the control compartment relatively low, thereby facilitating the maintenance of the control compartment.

In some embodiments, in the height direction, the control compartment is located at a top of a topmost container. The control compartment is located at the top of the topmost container, so that the control compartment can cover the container, which reduces sunlight exposure to the container, thereby reducing the risk of temperature imbalance in the container.

In some embodiments, in the height direction, the compartment body includes a first top wall and a plurality of first side walls arranged around the first top wall, the first top wall and at least one first side wall are provided with a first vent, and the first vent is used for ventilation of the thermal management module.

In the above technical solution, the first vent is located at the first top and the first side wall of the compartment body, which helps the thermal management module to dissipate heat, thereby enabling the thermal management module to have a larger heat dissipation area and improving the temperature control effect of the thermal management module.

In some embodiments, the compartment body includes an isolation layer, the isolation layer divides the compartment body into a first compartment and a second compartment independent of each other, the first compartment is located at the top of the compartment body, the first compartment is configured to accommodate the thermal management module, and the second compartment is configured to accommodate the control module.

In the above technical solution, the isolation layer separates the thermal management module from the control module, thereby reducing the risk of interference between the thermal management module and the control module.

In some embodiments, the control compartment includes a first connector, and the first connector is electrically connected to the control module; each container includes a second connector, and the second connector is electrically connected to the battery cell; and the first connector is configured to cooperate with each second connection. The first connector cooperates with each second connector, so that the control module and the battery cell can be quickly connected, thereby making the connection between the control module and the battery cell more convenient.

In some embodiments, a size of the control compartment in the length direction is consistent with the size of the standard container in the length direction, a size of the control compartment in the width direction is consistent with the size of the standard container in the width direction, and a size of the control compartment in the height direction is 1/p1 of the size of one standard container in the height direction, where p1 is a positive integer, and 2≤p1≤5.

By setting that the size of the control compartment in the height direction is 1/p1 of the size of one standard container in the height direction, when the control compartment is placed for transportation, a height of p1 control compartments is consistent with the height of one standard container, so that p1 control compartments can be stacked, which facilitates the placement and transportation of the control compartment and saves the transportation costs of the control compartment.

In some embodiments, the container includes a plurality of batteries, and each battery includes a thermal management component and a plurality of battery cells. The control compartment further includes a third connector, and the third connector is in communication with the thermal management module; each container further includes a fourth connector and the thermal management component in communication with the fourth connector; and the third connector is configured to cooperate with each fourth connector.

In the above embodiments, the third connector cooperates with the fourth connector, so that the thermal management component and the thermal management module can be in communication quickly, thereby facilitating mounting the thermal management module.

In some embodiments, the compartment body includes a third compartment and a fourth compartment arranged separate from the third compartment, the thermal management module is accommodated in the third compartment, and the third compartment is located at the top of the topmost container. The control module includes a main control module, a power distribution module, a general control module, and a fire control module. The battery cell is electrically connected to the main control module, the main control module is electrically connected to the general control module, and the main control module, the general control module, and the fire control module are all electrically connected to the power distribution module. The main control module is located in the fourth compartment, and at least one of the power distribution module, the general control module, and the fire control module is located in the third compartment. By arranging at least one of the power distribution module, the general control module, and the fire control module, and the thermal management module in the third compartment, it is easier to transport at least one of the power distribution module, the general control module, and the fire control module, and the thermal management module separately from the container, thereby reducing the difficulty and costs of transporting the container. By arranging the main control module in the fourth compartment, the arrangement of the control module becomes more flexible, thereby reducing the risk of interference between the main control module and at least one of the power distribution module, the general control module, and the fire control module in the third compartment.

In some embodiments, a size of the third compartment in the length direction is consistent with the size of the standard container in the length direction, a size of the third compartment in the width direction is consistent with the size of the standard container in the width direction, and a size of the third compartment in the height direction is 1/p2 of the size of one standard container in the height direction, where p2 is a positive integer, and 2≤p2≤5.

By setting that the size of the third compartment in the height direction is 1/p2 of the size of one standard container in the height direction, when the third compartment is placed for transportation, the height of p2 third compartments is consistent with the height of one standard container, so that p2 third compartments can be stacked, which facilitates the placement and transportation of the third compartment and saves the transportation costs of the third compartment.

In some implementations, the container body includes a battery compartment, the plurality of battery cells are accommodated in the battery compartment, and the fourth compartment is located in the container body and arranged in the length direction with the battery compartment. By arranging the fourth compartment in the container body, the stability of the connection between the main control module and the battery cell is improved, which helps the control module to perform electrical control on the battery cell.

In some embodiments, in the length direction, the fourth compartment is formed at an end of the container body. By forming the fourth compartment at the end of the container body, it is easier to mount the fourth compartment and also to reduce the interference of the fourth compartment with the battery cell during maintenance.

In some embodiments, the battery compartment has a first compartment door, the fourth compartment has a first access door, and the first compartment door and the first access door are located on a side in the width direction. By arranging the first access door on the container, it is easier to maintain the main control module in the width direction, making the maintenance of the main control module more convenient.

In some embodiments, the general control module is located in the third compartment. The third compartment includes a fifth connector, and the fifth connector is electrically connected to the general control module; each container includes a sixth connector and the main control module electrically connected to the sixth connector; and the fifth connector is configured to cooperate with each sixth connector. The fifth connector cooperates with the sixth connector, so that the general control module and the main control module can be quickly connected, thereby facilitating mounting between the third compartment and the container.

In some embodiments, at least part of the control compartment is hung on an outer container wall of at least one container body in the length direction or the width direction. The separate design of the control compartment and the container allows for the independent manufacturing and transportation of both, which helps reduce the transportation costs of energy storage devices.

In some embodiments, the control compartment and the container are arranged separate from each other and are connected. The separate design of the control compartment and the container allows for the independent manufacturing and transportation of both, which helps reduce the transportation costs of energy storage devices.

In some embodiments, the compartment body includes a fifth compartment and a sixth compartment arranged separate from the fifth compartment, the thermal management module is accommodated in the fifth compartment, the first compartment is located at the top of the topmost container, and the control module is accommodated in the sixth compartment.

In the above embodiments, the thermal management module can be arranged separately from the control module, and the thermal management module is arranged on the top of the topmost container, so that the thermal management module does not occupy the weight and volume of the container, and can be manufactured and transported separately from the container, which helps to reduce the transportation cost of the energy storage apparatus. The control module is accommodated in the sixth compartment, thereby reducing the interference between the control module and the thermal management module.

In some embodiments, the sixth compartment is located at the bottom of the bottommost container; or, the sixth compartment is located between two adjacent containers in the height direction.

In the above embodiments, the sixth compartment is located at the bottom of the bottommost container or located between two adjacent containers, so that the sixth compartment does not occupy the weight and volume of the container, and the sixth compartment can be manufactured and transported separately from the container, which helps to reduce the transportation cost of the energy storage apparatus.

In some embodiments, a size of the sixth compartment in the length direction is consistent with the size of the standard container in the length direction, a size of the sixth compartment in the width direction is consistent with the size of the standard container in the width direction, and a size of the sixth compartment in the height direction is 1/p3 of the size of one standard container in the height direction, where p3 is a positive integer, and 2≤p3≤5.

By setting that the size of the sixth compartment in the height direction is 1/p3 of the size of one standard container in the height direction, when the sixth compartment is placed for transportation, the height of p3 control compartments is consistent with the height of one standard container, so that p3 sixth compartments can be stacked, which facilitates the placement and transportation of the sixth compartment and saves the transportation costs of the control compartment.

In some embodiments, the sixth compartment includes a seventh connector, and the seventh connector is electrically connected to the control module; each container includes an eighth connector, and the eighth connector is electrically connected to the battery cell; and the seventh connector is configured to cooperate with each eighth connector. The seventh connector cooperates with the eighth connector, so that the control module and the battery cell can be quickly connected, thereby making mounting of the sixth compartment and the container more convenient.

In some embodiments, the container body includes a battery compartment, the battery cell is accommodated in the battery compartment, the sixth compartment is located in the container body, and the sixth compartment is located at an end of the container body in the length direction.

By arranging the sixth compartment at the end of the container body in the length direction, the battery compartment and the control module are made to be relatively independent, thereby reducing the risk of interference between the battery compartment and the control module.

In some embodiments, the sixth compartment has a second access door, and the second access door is located on the side of the container body in the length direction. By arranging the second access door at the end of the container body in the length direction, with the control module located in the sixth compartment, it is convenient to maintain the control module at the end of the container body in the length direction.

In some embodiments, the container includes a battery compartment and a wiring harness compartment, the plurality of battery cells are accommodated in the battery compartment, and the wiring harness compartment is located in the container body and arranged in the length direction with the battery compartment. The wiring harness compartment is provided with an opening, and at least part of a connecting wiring harness between the container and the control compartment passes through the opening. By arranging the wiring harness compartment, at least part of the connecting wiring harness between the container and the control compartment passes through the wiring harness compartment, thereby reducing the risk of the connecting wiring harnesses between the container and the control compartment being exposed outside the container and consequently damaged.

In some embodiments, the container includes a plurality of batteries, the plurality of batteries are arranged in rows and columns, the plurality of batteries in each row are arranged in the length direction, the plurality of batteries in each column are arranged in the height direction, and each battery includes a thermal management component and a plurality of battery cells. The container further includes a main pipeline and a plurality of branch lines, the main pipeline is in communication with the thermal management module and each branch line, and each branch line is in communication with the thermal management components of the plurality of batteries in one column.

The main pipeline is in communication with the thermal management module, the thermal management module can supply fluid to the main pipeline, and the main pipeline supplies the fluid to the plurality of branch lines, so that temperature of the fluid entering the thermal management component is more uniform, thereby reducing the risk of temperature runaway of the battery.

In some embodiments, the container includes a plurality of batteries, the plurality of batteries are arranged in rows and columns, the plurality of batteries in each row are arranged in the length direction, and the plurality of batteries in each column are arranged in the height direction; each battery includes the thermal management component and the plurality of battery cells; the thermal management module includes a pumping apparatus, a first heat exchanger, a compressor, a throttling apparatus, and a second heat exchanger; the pumping apparatus, the first heat exchanger, the thermal management component, and the pumping apparatus are sequentially connected to form a cooling circulation loop; and the compressor, the second heat exchanger, the throttling apparatus, the first heat exchanger, and the compressor are sequentially connected to form a coolant circulation loop. The components of the thermal management module are independent of the battery, thereby reducing the risk of interference between the thermal management module and the battery.

In some embodiments, the container includes the battery cell arranged in the container body, with a weight of the single battery cell ranging from 5 kg to 60 kg. The weight of the battery cell is appropriate so that a suitable number of batteries can be placed in the container body, thereby meeting transportation requirements while maintaining a moderate energy density.

In some embodiments, a weight of the container is M, where M≤35 tons, so that lifting by a relevant lifting apparatus is facilitated when the container is lifted and the transfer of the container is facilitated.

In some embodiments, the weight of the container is M, and a total weight of the battery cells in the container body is M1, where (M1/M)×100%≥60%. In this way, on the one hand, the weight ratio of the battery cells per unit volume of the container can be increased, thereby increasing the power per unit volume of the container; and on the other hand, during transportation of the container, more battery cells that contribute to energy storage and are difficult to produce at the destination are transported, while other structures can be produced at a place closer to the destination without needing to be transported or with reduced transportation. After the container is assembled into the energy storage apparatus, it is beneficial to reduce the transportation costs of the assembled energy storage apparatus.

In some embodiments, (M1/M)×100%≥80%. In this way, this further helps to reduce the transportation costs of the assembled energy storage apparatus.

In some embodiments, the weight of the container is M, and a plurality of batteries are arranged in the container body; and the battery includes an accommodating box and the battery cells, the battery cells are accommodated in the accommodating box, and a total weight of the batteries is M2, where 70%≤(M2/M)×100%≤90%. When (M2/M)×100%≥70%, the weight ratio of the battery per unit volume of the container can be increased, thereby increasing the energy density of the container; and when (M2/M)×100%≤90%, the structural strength of the container can be maintained. Therefore, when 70%≤(M2/M)×100%≤90%, both the energy density and structural strength of the container can be taken into account, making the container more practical.

In some embodiments, a volume of the container is V, and a total volume of the battery cells in the container body is V1, where (V1/V)×100%≥30%. On the one hand, the volume ratio of the battery cells per unit volume of the container can be increased, thereby increasing the power per unit volume of the container; and on the other hand, during transportation of the container, more battery cells that contribute to energy storage and are difficult to produce at the destination are transported, while other functional elements such as a control element of the energy storage apparatus can be produced at a place closer to the destination without needing to be transported or with reduced transportation. After the container is assembled into the energy storage apparatus, it is beneficial to reduce the transportation costs of the assembled energy storage apparatus.

In some embodiments, (V1/V)×100%≥50%. This further helps to reduce the transportation costs of the assembled energy storage apparatus.

In some embodiments, the volume of the container is V, and a plurality of batteries are arranged in the container body; and the battery includes an accommodating box and the battery cells, the battery cells are accommodated in the accommodating box, and a total volume of the batteries is V2, where 50%≤(V2/V)×100%≤80%. When (V2/V)×100%≥50%, the volume ratio of the battery per unit volume of the container can be increased, thereby increasing the energy density of the container; and when (V2/V)×100%≤80%, the container can have structural members of a sufficient volume to maintain the structural strength of the container. Therefore, when 50%≤(V2/V)×100%≤80%, both the energy density and structural strength of the container can be taken into account, making the container more practical.

In some embodiments, two adjacent containers in the height direction are welded, clamped, or connected by a fastener. This helps to reduce the risk of two adjacent containers shifting relative to each other after stacking, thereby improving the structural stability of the energy storage apparatus.

In some embodiments, in the height direction, at least part of the control compartment and an adjacent container thereof are welded, clapped, or connected by a fastener. This helps to reduce the risk of the control compartment and the container shifting relative to each other after stacking, thereby improving the structural stability of the energy storage apparatus.

In some embodiments, the plurality of containers include a first container and a second container, the first container is located above the second container, a bottom of the first container is provided with a limiting pin, and a top of the second container is provided with a limiting hole, and the limiting pin is clamped in the limiting hole. Two adjacent containers are fixed by clamping the limiting pin in the limiting hole, so that a purpose of restricting relative lifting of the two adjacent containers can be achieved by a simple structure.

In some embodiments, the bottom of the first container is provided with a first limiting member, the first limiting member is provided with a limiting groove, the top of the second container is provided with a second limiting member, the second limiting member is provided with a limiting hole, and two ends of the limiting pin are respectively clamped in the limiting groove and the limiting hole. The two ends of the limiting pin are respectively clamped in the limiting groove and the limiting hole, so that two adjacent containers can be fixed, and a purpose of restricting relative shifting of the two adjacent containers can be achieved by a simple structure.

In some embodiments, in the height direction, heights of some containers of the m containers are not equal to heights of the other containers. This facilitates improving the flexibility of the capacity of the container, thereby meeting diverse needs.

In some embodiments, sizes of the m containers in the height direction are equal. Therefore, it facilitates simplifying the manufacturing process and reducing the costs.

In some embodiments, the standard container is a 20-foot standard container, and a height of the standard container is 2896 mm, 2591 mm or 2438 mm. The sum of the sizes of the m1 containers 10 in the height direction Z is equal to the height of the 20-foot standard container, which is 2896 mm, 2591 mm, or 2438 mm.

In a second aspect, embodiments of the present application provide a container, including a container body and battery cells, where the battery cell is accommodated in the container body, a size of the container in a length direction and a size of the container in a width direction are consistent with those of a standard container, and a size of the container in a height direction of the container is less than a size of one standard container in the height direction.

In the above embodiments, by setting the size of the container in the height direction to be less than the size of one standard container in the height direction, the size of the container during transportation does not exceed the size of the corresponding standard container for sea or land transportation in the height direction of the container. This facilitates improving the convenience during transportation of the container, thereby reducing the transportation costs of the container and the energy storage apparatus using the container.

In some embodiments, the size of the container in the height direction is 1/2 or 1/3 of the size of the standard container in the height direction. On the one hand, it can reduce the use of structural members of the container body and increase the weight of the battery cell per unit volume; and on the other hand, it helps to make full use of the available space in the height direction during transportation, and reduces space waste during transportation of the container, thereby helping to reduce the transportation costs.

In some embodiments, a top of the container body has a plurality of lifting parts, and the plurality of lifting parts are configured to cooperate with a lifting appliance to lift the container. The lifting appliance cooperates with the lifting part, so that the container is lifted to facilitate the stacking of the containers in the height direction or to facilitate the lifting operation of the containers during transportation.

In some embodiments, the lifting part includes a bearing part, an accommodating groove, and an opening, the accommodating groove is located in the bearing part, the accommodating groove and an outside of the accommodating groove are in communication by the opening, and the opening is located at a top of the bearing part. The lifting part has a simple structure, thereby facilitating lifting the container.

In some embodiments, a bottom of the container body has a limiting pin, and the limiting pin is configured to cooperate with the container body of an adjacent container for limiting. A simple structure is used to achieve the purpose of restricting relative shifting of two adjacent containers.

In some embodiments, a plurality of batteries placed in rows and columns are in the container body, and each battery includes a plurality of battery cells.

In a third aspect, embodiments of the present application provide an energy storage device, including a control compartment and the container provided in any embodiment of the second aspect. The control compartment includes a compartment body, a control module, and a thermal management module. The control module is configured to perform electrical control on the battery cell, and the thermal management module is configured to manage temperature of the battery cell. The compartment body and the container are arranged in a height direction of the container, the thermal management module and/or at least part of the control module are/is arranged in the compartment body, a size of the compartment body in a length direction thereof is consistent with a size of a standard container in the length direction, a size of the compartment body in a width direction thereof is consistent with a size of the standard container in the width direction, and a size of the compartment body in the height direction is 1/p of a size of the standard container in the height direction, where p is a positive integer, and 2≤p≤5.

By arranging the control module, the control module can control the input or output of electric energy of the battery cell, thereby realizing the electrical control over the battery cell. By arranging the thermal management module, the thermal management module can manage the temperature of the battery cell, thereby reducing the risk of temperature runaway in the battery cell. The compartment body can integrate the control module and the thermal management module, thereby facilitating maintenance of the control module and the thermal management module. The size of the compartment body in the height direction is less than the size of one standard container in the height direction, so that the size of the compartment body during transportation does not exceed the size of the corresponding standard container for sea or land transportation in the height direction. This facilitates improving the convenience during transportation of the compartment body. The size of the compartment body in the length direction and the size of the compartment body in the width direction are consistent with those of the standard container, so that the horizontal area occupied by the compartment body during transportation is consistent with that of the standard container. The size of p compartment bodies in the height direction is equal to the size of one standard container in the height direction, so that the space occupied by p compartment bodies during stacking is the same as the space occupied by one standard container, which improves the utilization rate of the space where the compartment body is placed, facilitates making full use of the available space in the height direction during transportation, reduces space waste during transportation of the compartment body, and lowers the transportation costs of the compartment body and the energy storage device using the compartment body, thereby reducing the use costs of the energy storage device.

In some embodiments, part of the control module is arranged in the compartment body, while the remaining part of the control module is arranged in the container.

In some embodiments, the control module includes a main control module, a power distribution module, a general control module, and a fire control module, and the main control module, the general control module, and the fire control module are all electrically connected to the power distribution module.

In a fourth aspect, embodiments of the present application provide an energy storage system, including a power conversion apparatus and the energy storage apparatus provided in any embodiment of the first aspect or the energy storage device provided in any embodiment of the third aspect, where the power conversion apparatus is configured to electrically connect a power generation apparatus and the energy storage apparatus or the energy storage device.

In a fifth aspect, embodiments of the present application provide a charging network, including a charging pile, and the energy storage apparatus provided in any embodiment of the first aspect or the energy storage device provided in any embodiment of the third aspect, where the charging pile is electrically connected to the energy storage apparatus or the energy storage device, and the energy storage apparatus or the energy storage device is configured to provide electric energy for the charging pile.

### BRIEF DESCRIPTION OF THE DRAWINGS

To more clearly describe the technical solutions of the embodiments of the present application, the drawings required to be used in the embodiments will be briefly introduced below, and it should be understood that the following drawings only show some embodiments of the present application, and therefore should not be viewed as limiting the scope of the present application. For those of ordinary skills in the art, other relevant drawings may also be obtained based on these drawings without creative work.
FIG. 1 is a schematic structural view of a charging network according to some embodiments of the present application;
FIG. 2 is a schematic structural view of an energy storage system according to some embodiments of the present application;
FIG. 3 is a schematic structural view of an energy storage apparatus according to some embodiments of the present application;
FIG. 4 is a schematic structural view of an energy storage apparatus according to some other embodiments of the present application;
FIG. 5 is a schematic structural view of an energy storage apparatus (a first connector and a second connector) according to some embodiments of the present application;
FIG. 6 is a schematic structural view of an energy storage apparatus (a compartment body includes a third compartment and a fourth compartment) according to some embodiments of the present application;
FIG. 7 is a schematic structural view of an energy storage apparatus (a compartment body includes a third compartment and a fourth compartment) according to some other embodiments of the present application;
FIG. 8 is an arrangement view of the energy storage apparatus according to some embodiments of the present application;
FIG. 9 is a schematic structural view of an energy storage apparatus (a compartment body includes a fifth compartment and a sixth compartment) according to some embodiments of the present application;
FIG. 10 is a schematic structural view of an energy storage apparatus (a compartment body includes a fifth compartment and a sixth compartment) according to some other embodiments of the present application;
FIG. 11 is a schematic structural view of an energy storage apparatus (a compartment body includes a fifth compartment and a sixth compartment) according to yet some other embodiments of the present application;
FIG. 12 is a schematic structural view of a container according to some embodiments of the present application;
FIG. 13 is a schematic structural view of a thermal management module according to some embodiments of the present application;
FIG. 14 is a schematic structural view of a container according to some other embodiments of the present application;
FIG. 15 is an exploded schematic view of a battery cell in a container according to an embodiment of the present application;
FIG. 16 is a partial enlarged view of a part A in FIG. 14;
FIG. 17 is a schematic structural view of part of one step of the container according to the embodiment of the present application in a lifting process;
FIG. 18 is a schematic structural view of part of another step of the container according to the embodiment of the present application in the lifting process;
FIG. 19 is a schematic structural view of part of one step of another container according to an embodiment of the present application in a lifting process;
FIG. 20 is a schematic structural view of part of another step of another container according to the embodiment of the present application in the lifting process;
FIG. 21 is a schematic structural view of an energy storage apparatus according to yet some other embodiments of the present application;
FIG. 22 is a schematic structural view of cooperation of two adjacent containers of an energy storage apparatus according to an embodiment of the present application;
FIG. 23 is a schematic structural view of cooperation of two adjacent containers of another energy storage apparatus according to an embodiment of the present application;
FIG. 24 is a schematic structural view of cooperation of two adjacent containers of a still another energy storage apparatus according to an embodiment of the present application;
FIG. 25 is a schematic structural view of a limiting pin in FIG. 24;
FIG. 26 is a schematic structural view of another energy storage apparatus according to an embodiment of the present application; and
FIG. 27 is a schematic structural view of an energy storage device according to some embodiments of the present application.

Reference Numerals: 1000-Charging network; 2000-Energy storage system; 100-Energy storage apparatus; 10-Container; 1-Container body; 11-Battery compartment; 12-Wiring harness compartment; 111-First compartment door; 13-Frame; 14-Maintenance door; 3-Lifting part; 31-Bearing part; 32-Accommodating groove; 33-Opening; 2-Battery; 21-Battery cell; 211-Shell; 2111-Housing; 2112-End cap; 211a-Accommodating cavity; 212-Electrode assembly; 22-Thermal management component; 23-Accommodating box; 3-Pipeline system; 31-Main pipeline; 32-Branch line; 4-Fastener; 41-Limiting pin; 42-Body; 43-Flange; 5-Electrical compartment; 51-Electrical element; 6-Water-cooling unit; 7-Lifting appliance; 8-First limiting member; 81-Limiting groove; 9-Second limiting member; 91-Limiting hole; 101-First container; 102-Second container; 10b-First connector; 10c-Second connector; 10d-Third connector; 10e-Fourth connector; 10f-Fifth connector; 10i-Sixth connector; 10j-Seventh connector; 10k-Eighth connector; 20-Control compartment; 201-Compartment body; 2011-First top wall; 2012-First side wall; 201a-First vent; 2013-First compartment; 2014-Second compartment; 2015-Isolation layer; 2016-Third compartment; 2017-Fourth compartment; 20171-First access door; 2018-Fifth compartment; 2019-Sixth compartment; 20191-Second access door; 202-Control module; 2021-Main control module; 2022-General control box; 203-Thermal management module; 2031-Pumping apparatus; 2032-First heat exchanger; 2033-Compressor; 2034-Throttling apparatus; 2035-Cooling fan; 2036-Second heat exchanger; 203a-Cooing liquid circulation loop; 203b-Coolant circulation loop; 200-Charging pile; 300-Power conversion apparatus; 400-Energy storage device; 3000-Power generation apparatus; X-Length direction; Y-Width direction; Z-Height direction.

### DETAILED DESCRIPTION

Embodiments of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

In the description of the present application, it needs to be noted that unless otherwise specified, "plurality of" means two or more; and the directions or position relationships indicated by the terms "above", "below", "left", "right", "inner", "outer", etc., are only provided to facilitate the description of the present application and simplify the description, rather than indicating or implying that the apparatus or element referred to must have a specific direction, or be constructed and operated in a specific direction, and therefore cannot be construed as limiting the present application. In addition, the terms such as "first", and "second" are only for the purpose of description, and cannot be construed as indicating or implying relative importance. "Perpendicular" is not perpendicular in the strict sense, but is within the margin of error allowed. "Parallel" is not strictly parallel, but within an allowable range of an error.

The reference to "embodiments" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it needs to be further noted that, unless otherwise expressly specified and limited, terms "mounted," "connected," and "connection" should be understood in a broad sense, for example, as a fixed connection, as a detachable connection, or as an integral connection; and as a direct connection, or as an indirect connection through an intermediate medium. For those of ordinary skill in the art, the specific meaning of the above terms in the present application may be understood on a case-by-case basis.

The appearance of "plurality" in the present application refers to two or more (including two).

In the present application, a battery cell may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in the embodiment of the present application. The battery cell may be in a cylindrical shape, a flat shape, a cuboid shape or another shape, which is also not limited in the embodiments of the present application.

The battery mentioned in the embodiments of the present application may be a single physical module including one or more battery cells to provide a higher voltage and capacity. When a plurality of battery cells are provided, the plurality of battery cells are connected in series, in parallel, or in parallel-series via a busbar component.

In some embodiments, the battery may be a battery module, and when a plurality of battery cells are provided, the plurality of battery cells are arranged and fixed to form a battery module.

In some embodiments, the battery may be a battery pack. The battery pack includes an accommodating box and a battery cell. The battery cell or the battery module is accommodated in the accommodating box.

In some embodiments, an energy storage apparatus includes an energy storage container or an energy storage cabinet.

The battery cell generally includes an electrode assembly. The electrode assembly includes a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode, and can function to prevent a short circuit between the positive electrode and the negative electrode while enabling the active ions to pass through.

Optionally, the electrode assembly is of a winding structure. A positive electrode plate and a negative electrode plate are wound into the winding structure.

Optionally, the electrode assembly is of a laminated structure.

Optionally, the shape of the electrode assembly may be cylindrical, flat, polygonal prism-shaped, or the like.

Power stations are demanding increasingly higher area energy density for energy storage containers, which correspondingly increases the weight of the containers to increase power. The containers need to be transported from the production site to the usage site via land and/or sea transportation. Land and sea transportation usually has weight restrictions, so a contradiction arises between the increase in energy density and the weight of the energy storage containers.

In view of this, embodiments of the present application propose a new technical solution, which is applicable to containers and energy storage apparatuses including the containers.

The energy storage apparatuses can be used in, for example, energy storage power stations, wind power generation systems, solar power generation systems, mobile power systems or temporary power supply systems. For example, the energy storage station can store electric energy during low electricity consumption periods and provide electric energy for relevant users or electrical devices during peak electricity consumption periods. The wind energy collected by the wind turbine generator system in the wind power generation system is converted into electric energy, which is stored by the energy storage apparatus. The solar power generation system can convert solar energy into electric energy, which is stored by the energy storage apparatus, and supplied to users when needed. The mobile power system can supply power to relevant electrical devices in places where the power grid power supply system cannot reach, such as remote mountainous regions and remote wild regions. The temporary power supply system can provide power for users when power supply is insufficient. An energy storage system provided by the embodiments of the present application may be any power system that requires the energy storage apparatus.

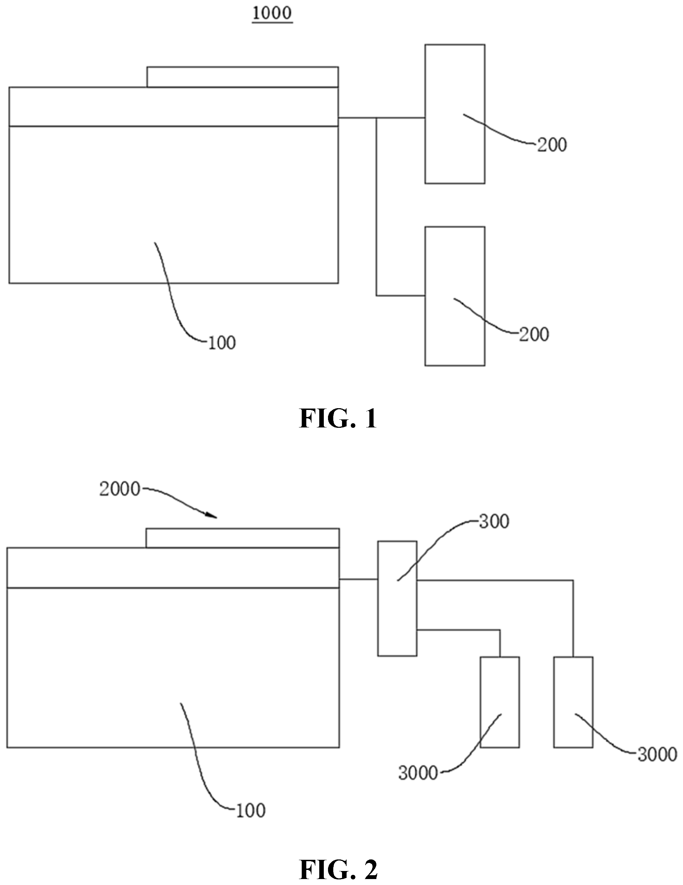

Referring to FIG. 1, FIG. 1 is a schematic structural view of a charging network 1000 according to some embodiments of the present application. The embodiments of the present application provide a charging network 1000, the charging network 1000 includes a charging pile 200, and the charging pile 200 is configured to charge the electrical device. The charging network 1000 may also include an energy storage apparatus 100, and the energy storage apparatus 100 is electrically connected to the charging pile 200 and configured to provide electric energy for the charging pile 200.

It should be noted that the charging pile 200 and a battery cell 21 in the energy storage apparatus 100 are electrically connected by a cable, and the battery cell 21 can provide the electric energy stored therein to the charging pile 200. The charging pile 200 has a connector, and the connector can be connected to the electrical device, thereby supplying energy to the electrical device. The charging network 1000 uses the energy storage apparatus 100, which can effectively improve the security of the charging network 1000 and also help to improve the flexibility of the charging network 1000 during deployment.

In one charging network 1000, one charging pile 200 can be provided, and the energy storage apparatus 100 provides electric energy for the one charging pile 200; and a plurality of charging piles 200 can also be provided, and the energy storage apparatus 100 provides electric energy for the plurality of charging piles 200.

The energy storage apparatus 100 may include a container 10, and the container 10 includes a container body 1 and a battery cell 21. The battery cell 21 is electrically connected to the charging pile 200, so that the battery cell 21 can provide electric energy for the charging pile 200.

As an example, as shown in FIG. 1, the charging network 1000 includes one energy storage apparatus 100 and two charging piles 200, and one energy storage apparatus 100 provides electric energy for the two charging piles 200.

In some embodiments of the present application, the charging network 1000 may include a charging pile 200 and an energy storage device 400, the charging pile 200 is electrically connected to the energy storage device 400, and the energy storage device 400 is configured to provide electric energy for the charging pile 200.

Referring to FIG. 2, FIG. 2 is a schematic structural view of an energy storage system 2000 according to some embodiments of the present application. The embodiments of the present application provide an energy storage system 2000. The energy storage system 2000 includes a power conversion apparatus 300, and the power conversion apparatus 300 can be electrically connected to power generation apparatuses 3000 to convert the electrical power provided by the power generation apparatus 3000. The energy storage system 2000 may further include the energy storage apparatus 100. The energy storage apparatus 100 is electrically connected to the power conversion apparatus 300. The power conversion apparatus 300 guides the electric energy provided by the power generation apparatus 3000 to the energy storage apparatus 100 for storage after power conversion.

The power conversion apparatus is configured to be connected between the power generation apparatus 3000 and the energy storage apparatus 100. The power generation apparatus 3000 is configured to generate electric energy, and the power generation apparatus 3000 is configured to store the generated electric energy in the energy storage apparatus 100 through the power conversion apparatus. The energy storage system 2000 uses the energy storage apparatus 100, which can effectively improve the operational safety of the energy storage system 2000. In practice, a power generation device can specifically be a solar panel, a hydroelectric power generation device, a thermal power generation device, etc. The present application does not restrict the specific type of the power generation device.

For example, as shown in FIG. 2, the energy storage system 2000 includes the energy storage apparatus 100 and the power conversion apparatus 300. The two power generation apparatuses 3000 respectively transmit the generated electric energy to the power conversion apparatus 300, and the electric energy is guided into the energy storage apparatus 100 for storage by the power conversion apparatus 300.

In some embodiments, the energy storage system 2000 may include a power conversion apparatus 300 and an energy storage device 400, the power conversion apparatus is configured to electrically connect the power generation apparatus 3000 to the energy storage device 400, and the power generation apparatus 3000 is configured to store the generated electric energy into the energy storage device 400 through the power conversion apparatus.

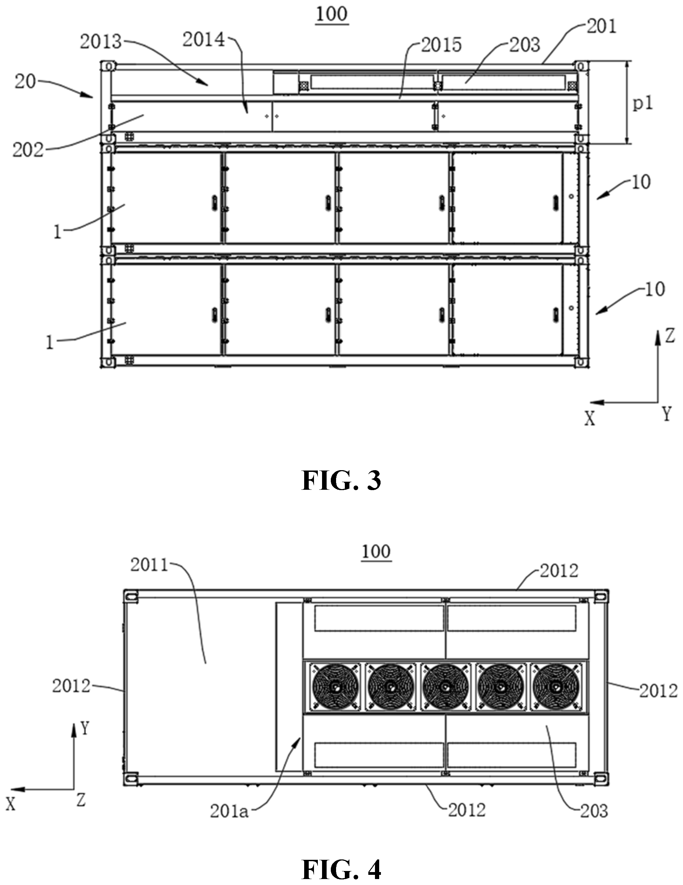

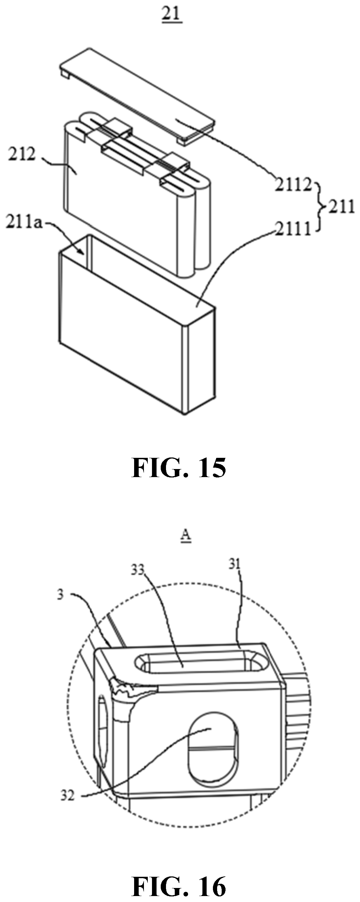

Referring to FIG. 3, FIG. 3 is a schematic structural view of an energy storage apparatus 100 according to some embodiments of the present application. The embodiments of the present application provide an energy storage apparatus 100, and the energy storage apparatus 100 includes containers 10 and a control compartment 20. m containers 10 are provided, where m≥2, the m containers 10 are arranged in a height direction Z of the container 10, the container 10 includes a container body 1 and a plurality of battery cells 21 (shown in FIG. 15), and the plurality of battery cells 21 are accommodated in the container body 1. The control compartment 20 includes a compartment body 201, a control module 202, and a thermal management module 203. The control module 202 and the thermal management module 203 are accommodated in the compartment body 201, and the control module 202 and the thermal management module 203 are both connected to the container 10. The control module 202 is configured to perform electrical control on the battery cell 21, and the thermal management module 203 is configured to manage temperature of the battery cell 21. A size of the container 10 in a length direction X thereof is consistent with a size of a standard container in the length direction X, a size of the container 10 in a width direction Y thereof is consistent with a size of the standard container in the width direction Y, a size of one container 10 in the height direction Z is less than a size of the standard container in the height direction Z, and a sum of sizes of m1 containers 10 in the m containers 10 in the height direction Z is equal to a sum of sizes of n standard containers in the height direction Z.

The standard container can be a container of the standard size used during transportation, such as 20 feet, 30 feet, 40 feet or 45 feet, which meets the corresponding standards, with a length, a width, and a height having corresponding sizes.

In the embodiments of the present application, when the error between the sum of the sizes of the m1 containers 10 in the height direction Z and the sum of the sizes of the n standard containers in the height direction Z is within 5 mm, it can be considered that the sum of the sizes of the m1 containers 10 in the m containers 10 in the height direction Z is equal to the sum of the sizes of the n standard containers in the height direction Z. For example, the sum of the heights of two containers 10 in the energy storage device 100 is 2595 mm, and the size of the standard container corresponding to the container 10 is 2591mm. It can be considered that the sum of the sizes of the two containers 10 in the height direction Z is equal to the size of one standard container in the height direction Z.

The container 10 is typically in a cuboid structure. The length direction X and the width direction Y of the container 10 are both parallel to the horizontal plane. The length direction X of the container 10 is parallel to the longest side of the cuboid structure of the container 10. The height direction Z of the container 10 is perpendicular to the ground. In the embodiments of the present application, the size of the container 10 in the height direction Z is less than the size of the standard container in the height direction Z, the length and width of the container 10 are consistent with those of the standard container, and the length and width of the container can also be considered consistent within a range of error of 5 mm.

The number of the containers 10 in the energy storage apparatus 100 can be any number of two or more. For example, the energy storage apparatus 100 includes two containers 10, and the two containers 10 are stacked in the height direction Z; for another example, the energy storage apparatus 100 includes three containers 10, and the three containers 10 are stacked in the height direction Z. It can be understood that if the number of the containers 10 in the energy storage apparatus 100 is too large, it may easily cause damage to the bottommost container body 1. The sum of the heights of all containers 10 stacked in the height direction Z is less than or equal to the sum of the heights of eight standard containers stacked together.

It may be that m1 is less than m, and a sum of sizes of part of the containers 10 in the m containers 10 in the height direction Z is equal to the sum of the sizes of the n standard containers in the height direction Z. For example, m=8, m1=5, and n=3, where five containers 10 can be any five containers 10 in eight containers 10.

It can also be that m1=m, and the sum of the sizes of the m containers 10 in the height direction Z is equal to the sum of the sizes of the n standard containers in the height direction Z. For example, m=2, and the sum of the heights of two containers 10 is equal to the height of one standard container.

It can be understood that m, m1, and n are all positive integers.

The compartment body 201 of the control compartment 20 may be an independent compartment, and the control module 202 and the thermal management module 203 are both accommodated in the compartment body 201. It can be that the control compartment 20 and the container 10 are detachably connected, for example, clamped or locked by bolts; or the control compartment 20 and the container 10 are fixedly connected, for example, welded; or the control compartment 20 and the container 10 are placed spaced apart from each other.

The compartment body 201 can also be a collection of a plurality of independent compartments. For example, the compartment body 201 includes a plurality of compartment portions, the thermal management module 203 is arranged in a part of the compartment portions, and the control module 202 is arranged in another part of the compartment portions. In an embodiment where the compartment body 201 includes a plurality of compartment portions, the thermal management module 203 and the control module 202 may be located in different compartment portions.

The control module 202 may include a main control module 2021, a power distribution module, a general control module, and a fire control module. It may be that the main control module 2021, the power distribution module, the general control module, and the fire control module are located in the same compartment or are separately arranged in different compartments. The main control module 2021 is configured to control the input and output of highvoltage electric energy of the battery cell 21 in the container 10. The general control module is configured to control the switching actions of the main control module 2021 in the container 10. The fire control module is configured to control a fire-fighting element to operate when a fire occurs due to temperature imbalance in the container 10. The fire-fighting element can be a fire extinguisher or the like and can be arranged in the control compartment 20 or in the container 10. The power distribution modules are configured to electrically connect the main control modules 2021, the general control modules, and the fire control modules, so as to facilitate the connection of circuits of the main control modules 2021, the general control modules, and the fire control modules as well as the normal operation of the main control modules 2021, the general control modules, and the fire control modules.

It can be that the main control modules 2021 correspond to the containers 10 one by one, and one main control module 2021 correspondingly controls the input and output of electric energy of the battery cell 21 in one container 10. It can also be that the plurality of battery cells 21 in one container 10 form a plurality of batteries 2, the main control modules 2021 correspond to the batteries 2 one to one, and one main control module 2021 correspondingly controls the input or output of electric energy of one battery 2. It can also be that one main control module 2021 correspondingly controls the input or output of electric energy of the battery cells 21 in a plurality of containers 10. A plurality of battery groups may be in one container 10, a plurality of batteries 2 are connected in series to form a battery cluster, and a plurality of battery clusters are connected in parallel. One main control module 2021 can correspondingly control one or more battery clusters. Correspondingly, if one container 10 has a plurality of main control modules 2021, the main control modules 2021 can be arranged in one main control box or a plurality of main control boxes.

In the above technical solution, by arranging the control module 202, the control module 202 can control the input or output of electric energy of the battery cell 21, thereby realizing the electrical control over the battery cell 21. By arranging the thermal management module 203, the thermal management module 203 can manage the temperature of the battery cell 21, thereby reducing the risk of temperature runaway in the battery cell 21. The compartment body 201 can integrate the control module 202 and the thermal management module 203, thereby facilitating maintenance of the control module 202 and the thermal management module 203. By setting the size of the container 10 in the height direction Z to be less than the size of one standard container in the height direction Z, the size of the container 10 during transportation does not exceed the size of the corresponding standard container for sea or land transportation in the height direction Z of the container 10. This facilitates improving the convenience during transportation of the container 10. The size of the container 10 in the length direction X and the size of the container 10 in the width direction Y are both consistent with those of the standard container, thereby ensuring that a horizontal area occupied by the container 10 during transportation is consistent with that of the standard container. The sizes of the m1 containers 10 in the height direction Z are the sizes of the n standard containers in the height direction Z, so that the space occupied by the m1 containers 10 when stacked is the same as that occupied by the n standard containers. This improves the utilization rate of the space where the container 10 is placed, helps to make full use of an available space in the height direction Z during transportation, reduces space waste during transportation of the container 10, and reduces the transportation costs of the container 10 and the energy storage apparatus 100 using the container 10, thereby reducing the use costs of the energy storage apparatus 100. The containers 10 are stacked, which can also reduce the floor space and save space.

In some embodiments, m1=2, and n=1.

It can be that the energy storage apparatus 100 includes more than two containers 10, for example, the energy storage apparatus 100 includes three, five, or eight containers 10. Or, the energy storage apparatus 100 includes only two containers 10.

By setting the heights of two containers 10 as the height of one standard container, when the plurality of containers 10 in the energy storage apparatus 100 are transported, two adjacent containers 10 can be stacked in the height direction Z, so that two containers 10 can right occupy the space to be occupied by one standard container, thereby improving the utilization rate of the space where the container 10 is placed and helping to reduce the transportation costs of the container 10.

In some embodiments, m1=3, and n=1. By setting the heights of three containers 10 as the height of one standard container, when a plurality of containers 10 in the energy storage apparatus 100 are transported, three adjacent containers 10 can be stacked in the height direction Z, so that three containers 10 can right occupy the space to be occupied by one standard container, thereby improving the utilization rate of the space where the container 10 is placed and helping to reduce the transportation costs of the container 10.

In some embodiments, m1=3, and n=2. By setting the heights of three containers 10 as the heights of two standard containers, when a plurality of containers 10 in the energy storage apparatus 100 are transported, three adjacent containers 10 can be stacked in the height direction Z, so that three containers 10 can right occupy the space to be occupied by two standard containers, thereby improving the utilization rate of the space where the container 10 is placed and helping to reduce the transportation costs of the container 10.

In some embodiments, at least part of the control compartment 20 and the container 10 are arranged in the height direction Z.

It can be that the whole control compartment 20 and the container 10 are arranged in the height direction Z, where the control compartment 20 can be an independent compartment or a collection of a plurality of compartments. It can also be that the control compartment 20 includes a plurality of compartment portions, and a part of the plurality of compartment portions and the container 10 are arranged in the height direction Z.

By arranging at least part of the control compartment 20 and the container 10 in the height direction Z, the area occupied by the container 10 in a horizontal direction can be reduced, thereby improving the space utilization rate of the energy storage apparatus 100.

In some embodiments, in the height direction Z, the control compartment 20 is located between two adjacent containers 10.

The control compartment 20 is located between two adjacent containers 10, which helps the control module 202 and the thermal management module 203 of the control compartment 20 to be connected to the containers 10 on both sides of the control compartment 20 with shorter lines. The control compartment 20 is located between two adjacent containers 10, which also facilitates maintenance.

In some embodiments, in the height direction Z, the control compartment 20 is located at a bottom of a bottommost container 10. The control compartment 20 is located at the bottom of the bottommost container 10, which makes the control compartment 20 relatively low, thereby facilitating the maintenance of the control compartment 20.

In some embodiments, in the height direction Z, the control compartment 20 is located at a top of a topmost container 10.

The control compartment 20 and the m containers 10 are stacked in the height direction Z, and the only one container 10 adjacent to the control compartment 20 is located at a top of the m containers 10 in the height direction Z.

In the above embodiments, the control compartment 20 is located at the top of the topmost container 10, so that the control compartment 20 can cover the container 10, which reduces sunlight exposure to the container 10, thereby reducing the risk of temperature imbalance in the container 10.

Referring to FIG. 3 and FIG. 4, FIG. 4 is a schematic structural view of an energy storage apparatus 100 according to some other embodiments of the present application. In some embodiments, in the height direction Z, the compartment body 201 includes a first top wall 2011 and a plurality of first side walls 2012 arranged around the first top wall 2011, the first top wall 2011 and at least one first side wall 2012 are provided with a first vent 201a, and the first vent 201a is used for ventilation of the thermal management module 203.

It can be that an entire surface of the first top wall 2011 is provided with an opening to form one first vent 201a. It can also be that part of the first top wall 2011 is provided with the opening to form one first vent 201a; for example, a side of the first top wall 2011 in the length direction X is provided with the opening, so that part of the first top wall 2011 forms the first vent 201a.

It can be that all the first side walls 2012 are provided with the first vent 201a, or only part of the first side walls 2012 are provided with the first vent 201a.

In the above technical solution, the first vent 201a is located at the first top and the first side wall 2012 of the compartment body 201, which helps the thermal management module 203 to dissipate heat, thereby enabling the thermal management module 203 to have more heat dissipation channels and improving the temperature control effect of the thermal management module 203.

Referring to FIG. 3 again, in some embodiments, the compartment body 201 includes an isolation layer 2015, the isolation layer 2015 divides the compartment body 201 into a first compartment 2013 and a second compartment 2014 independent of each other, the first compartment 2013 is located at the top of the compartment body 201, the first compartment 2013 is configured to accommodate the thermal management module 203, and the second compartment 2014 is configured to accommodate the control module 202.

The first compartment 2013 is located at the top of the compartment body 201, which allows the thermal management module 203 to be located at the top of the compartment body 201. There are no obstructions above the thermal management module 203, which is beneficial to heat dissipation of the thermal management module 203. The first compartment 2013 is separated from the second compartment 2014 by the isolation layer 2015. The isolation layer 2015 can separate the thermal management module 203 from the control module 202, which can reduce the interference of the thermal management module 203 on the control module 202, and also reduce the impact of external rain or sunlight exposure on the control module 202.

In the above technical solution, the isolation layer 2015 separates the thermal management module 203 from the control module 202, thereby reducing the risk of interference between the thermal management module 203 and the control module 202.

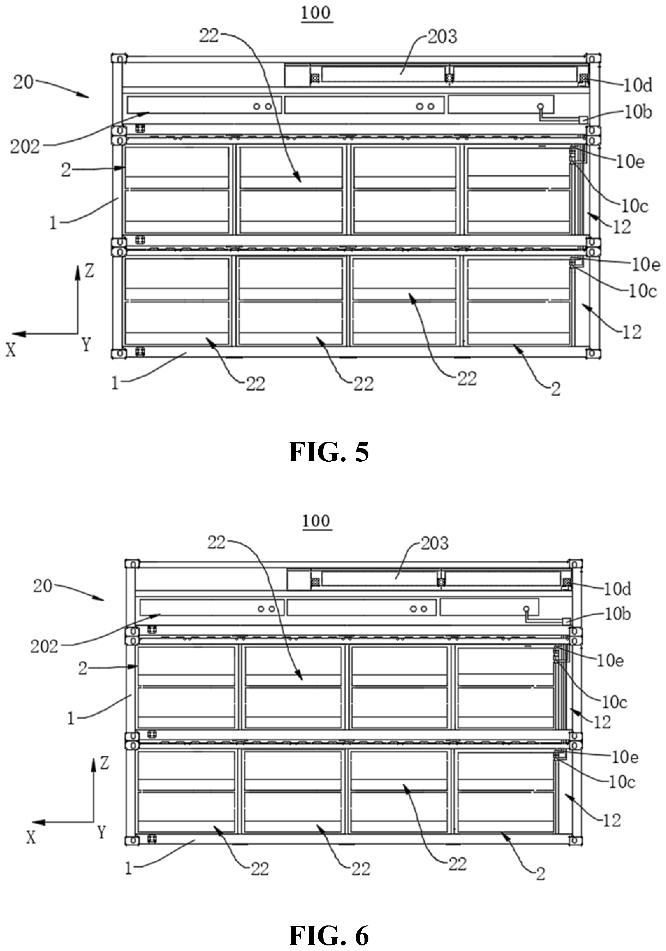

Referring to FIG. 5, FIG. 5 is a schematic structural view of an energy storage apparatus 100 (a first connector 10b and a second connector 10c) according to some embodiments of the present application. In some embodiments, the control compartment 20 includes a first connector 10b, and the first connector 10b is electrically connected to the control module 202; each container 10 includes a second connector 10c, and the second connector 10c is electrically connected to the battery cell 21; and the first connector 10b is configured to cooperate with each second connector 10c.

It can be that the first connector 10b is directly connected to the second connector 10c to achieve cooperation between the first connector 10b and the second connector 10c. For example, the first connector 10b can cooperate with each second connector 10c by insertion. It can be that the first connector 10b is fixed to the compartment body 201, and the second connector 10c is movably arranged on the container body 1; or the first connector 10b is movably arranged on the compartment body 201, and the second connector 10c is fixedly arranged on the container body 1; or the first connector 10b and the second connector 10c are movably arranged on the compartment body 201 and the container body 1, respectively. The first connector 10b can include a plurality of connecting parts, and the connecting parts are correspondingly connected to the second connectors 10c one to one, so that the first connector 10b is connected to a plurality of second connectors 10c.

It can also be that the first connector 10b and the second connector 10c are connected by a connecting member, and the connecting member can be a cable. It can be that the first connector 10b and the second connector 10c are fixed to the compartment body 201 and the container body 1, respectively; or the first connector 10b is fixed to the compartment body 201, and the second connector 10c is movably arranged on the container body 1; or the first connector 10b is movably arranged on the compartment body 201, and the second connector 10c is fixedly arranged on the container body 1; or the first connector 10b and the second connector 10c are movably arranged on the compartment body 201 and the container body 1, respectively.

As an example, as shown in FIG. 5, the first connector 10b is fixedly arranged in the control compartment 20, and the two second connectors 10c are respectively fixed in two container bodies 1. The first connector 10b and the second connector 10c are connected by a cable. The cable can be a quick-insertion cable, and two ends of the cable are each provided with a quick coupler. The two quick couplers are connected to the first connector 10b and the second connector 10c, respectively.

The first connector 10b cooperates with each second connector 10c, so that the control module 202 and the battery cell 21 can be quickly connected, thereby making the connection between the control module 202 and the battery cell 21 more convenient.

In some embodiments, a size of the control compartment 20 in the length direction X is consistent with the size of the standard container in the length direction X, a size of the control compartment 20 in the width direction Y is consistent with the size of the standard container in the width direction Y, and a size of the control compartment 20 in the height direction Z is 1/p1 of the size of one standard container in the height direction Z, where p1 is a positive integer, and 2≤p1≤5.

The size of the control compartment 20 in the height direction Z can be 1/2, 1/3, 1/4 or 1/5 of the size of one standard container in the height direction Z. For example, when the size of the control compartment 20 in the height direction Z is 1/3 of the size of one standard container in the height direction Z, the size of the control compartment 20 in the height direction Z multiplied by 3 is equal to the size of one standard container in the height direction Z.

By setting that the size of the control compartment 20 in the height direction Z is 1/p1 of the size of one standard container in the height direction Z, when the control compartment 20 is placed for transportation, a height of p1 control compartments 20 is consistent with the height of one standard container, so that p1 control compartments 20 can be stacked, which facilitates the placement and transportation of the control compartment 20 and saves the transportation costs of the control compartment 20.

In some embodiments, a size of the control compartment 20 in the length direction X is consistent with the size of the standard container in the length direction X, a size of the control compartment 20 in the width direction Y is consistent with the size of the standard container in the width direction Y, and a size of the control compartment 20 in the height direction Z is 1/p1 of the size of n standard containers in the height direction Z, where p1 is a positive integer, 2≤p1≤5, n is less than p1, and n is a positive integer.

As an example, the size of the control compartment 20 in the height direction Z is 1/3 of the sizes of two standard containers in the height direction Z.

In some embodiments, referring to FIG. 5 again, the container 10 includes a plurality of batteries 2, and each battery 2 includes a thermal management component 22 and a plurality of battery cells 21. The control compartment 20 further includes a third connector 10d, and the third connector 10d is in communication with the thermal management module 203; each container 10 further includes a fourth connector 10e and the thermal management component 22 in communication with the fourth connector 10e; and the third connector 10d is configured to cooperate with each fourth connector 10e.

It can be that the third connector 10d and the fourth connector 10e are in direct communication so as to achieve cooperation of the third connector 10d and the fourth connector 10e. For example, the third connector 10d cooperates with each fourth connector 10e by insertion. It can be that the third connector 10d is fixed to the compartment body 201, the fourth connector 10e is movably arranged on the container body 1; or, the third connector 10d is movably arranged on the compartment body 201, the fourth connector 10e is fixedly arranged on the container body 1; or the third connector 10d and the fourth connector 10e are movably arranged on the compartment body 201 and the container body 1, respectively. The third connector 10d can include a plurality of connecting parts, and the connecting parts are correspondingly connected to the fourth connectors 10e one to one, so that the third connector 10d is in communication with a plurality of fourth connectors 10e.

It can also be that the third connector 10d and the fourth connector 10e are in communication through a connecting member, and the connecting member can be a pipeline. It can be that the third connector 10d and the fourth connector 10e are fixed to the compartment body 201 and the container body 1, respectively; or, the third connector 10d is fixed to the compartment body 201, and the fourth connector 10e is movably arranged on the container body 1; or, the third connector 10d is movably arranged on the compartment body 201, and the fourth connector 10e is fixedly arranged on the container body 1; or both the third connector 10d and the fourth connector 10e are movably arranged on the compartment body 201 and the container body 1, respectively.

As an example, as shown in FIG. 5, the thermal management module 203 is provided with the third connector 10d, and each container 10 is provided with the fourth connector 10e. The third connector 10d and the fourth connector 10e are in communication by a pipeline. The pipeline can be a quick-insertion pipeline, and two ends of the pipeline are each provided with a quick coupler. The first connector 10b and the second connector 10c are both quick-insertion couplers, and the two quick couplers at both ends of the pipeline are connected to the first connector 10b and the second connector 10c, respectively.

In the above embodiments, the third connector 10d and the fourth connector 10e cooperate, so that the thermal management component 22 and the thermal management module 203 can be in communication quickly, thereby facilitating mounting the thermal management module 203.

Referring to FIG. 6, FIG. 6 is a schematic structural view of an energy storage apparatus 100 (a compartment body 201 includes a third compartment 2016 and a fourth compartment 2017) according to some embodiments of the present application. In some embodiments, the compartment body 201 includes a third compartment 2016 and a fourth compartment 2017 arranged separate from the third compartment 2016, the thermal management module 203 is accommodated in the third compartment 2016, and the third compartment 2016 is located at the top of the topmost container 10. The control module 202 includes a main control module 2021, a power distribution module, a general control module, and a fire control module. The battery cell 21 is electrically connected to the main control module 2021, the main control module 2021 is electrically connected to the general control module, and the main control module 2021, the general control module, and the fire control module are all electrically connected to the power distribution module. The main control module 2021 is located in the fourth compartment 2017, and at least one of the power distribution module, the general control module, and the fire control module is located in the third compartment 2016.

It can be that the power distribution module, the general control module, and the fire control module are all located in the third compartment 2016; or only one of the power distribution module, the general control module, and the fire control module is located in the third compartment 2016; or any two of the power distribution module, the general control module, and the fire control module are located in the third compartment 2016.

It can be that the main control modules 2021 correspond to the containers 10 one to one. It can be that a plurality of main control modules 2021 are all located in one fourth compartment 2017, or one main control module 2021 is correspondingly arranged in one fourth compartment 2017.

It can be that the fourth compartment 2017 is arranged spaced apart from the container 10; or the fourth compartment 2017 is located in the container 10; or the fourth compartment 2017 is directly connected to the container 10.

As an example, as shown in FIG. 6, the general control module, the power distribution module, and the fire control module are all arranged in a general control box 2022, and the general control box 2022 is arranged in the third compartment 2016. Each container body 1 is provided with one fourth compartment 2017, and the control module 202 is arranged in the fourth compartment 2017.

By arranging at least one of the power distribution module, the general control module, and the fire control module, and the thermal management module 203 in the third compartment 2016, it is easier to transport at least one of the power distribution module, the general control module, and the fire control module, and the thermal management module 203 separately from the container 10, thereby reducing the difficulty and costs of transporting the container 10. By arranging the main control module 2021 in the fourth compartment 2017, the arrangement of the control module 202 becomes more flexible, thereby reducing the risk of interference between the main control module 2021 and at least one of the power distribution module, the general control module, and the fire control module in the third compartment 2016.

In some embodiments, a size of the third compartment 2016 in the length direction X is consistent with the size of the standard container in the length direction X, a size of the third compartment 2016 in the width direction Y is consistent with the size of the standard container in the width direction Y, and a size of the third compartment 2016 in the height direction Z is 1/p2 of the size of one standard container in the height direction Z, where p2 is a positive integer, and 2≤p2≤5.

The size of the third compartment 2016 in the height direction Z can be 1/2, 1/3, 1/4 or 1/5 of the size of one standard container in the height direction Z. For example, when the size of the third compartment 2016 in the height direction Z is 1/3 of the size of one standard container in the height direction Z, the size of the third compartment 2016 in the height direction Z multiplied by 3 is equal to the size of one standard container in the height direction Z.

By setting that the size of the third compartment 2016 in the height direction Z is 1/p2 of the size of one standard container in the height direction Z, when the third compartment 2016 is placed for transportation, a height of p2 third compartments 2016 is consistent with the height of one standard container, so that p2 third compartments 2016 can be stacked, which facilitates the placement and transportation of the third compartment 2016 and saves the transportation costs of the third compartment 2016.

In some embodiments, the container body 1 includes a battery compartment 11, the battery cell 21 is accommodated in the battery compartment 11, and the fourth compartment 2017 is located in the container body 1, and arranged in the length direction X with the battery compartment 11.

It can be that the fourth compartment 2017 is located between two adjacent battery compartments 11 in the length direction X; or the fourth compartment 2017 is located on a side of all battery compartments 11 in the length direction X.

The fourth compartment 2017 and the battery compartment 11 can be separated by a partition, which facilitates performing temperature control on the battery cell of the battery compartment 11. Adjacent columns of batteries 2 can be separated by a partition, or no partition is arranged. By arranging the fourth compartment 2017 in the container body 1, the stability of the connection between the main control module 2021 and the battery cell 21 is improved, which helps the control module 202 to perform electrical control on the battery cell 21. Arranging the fourth compartment 2017 in the container body 1 can also facilitate the maintenance of the main control module 2021, and can also shorten a connection line between the battery 2 and the main control module 2021, thereby reducing the internal resistance of the energy storage apparatus.

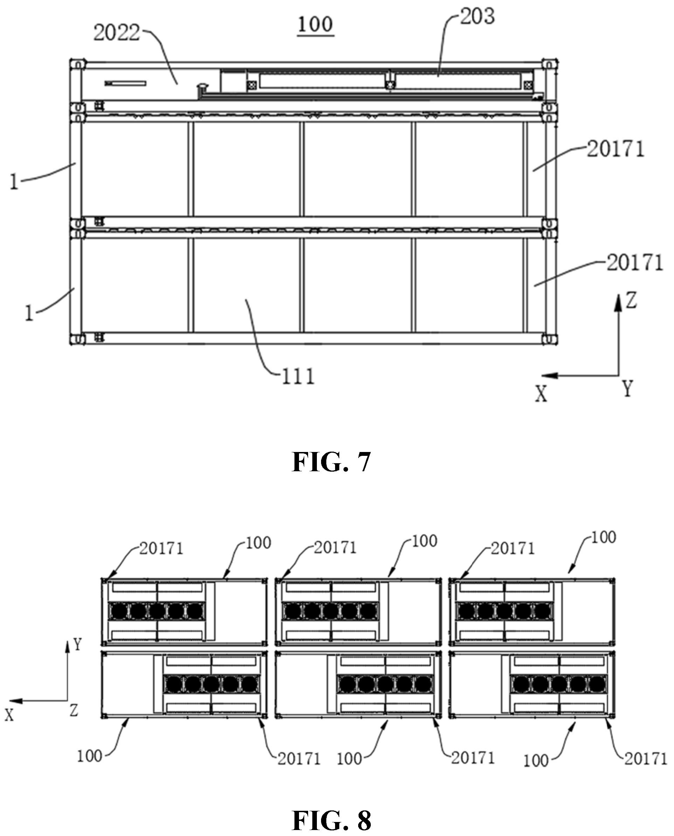

Referring to FIG. 7, FIG. 7 is a schematic structural view of an energy storage apparatus 100 (a compartment body 201 includes a third compartment 2016 and a fourth compartment 2017) according to some other embodiments of the present application. In some embodiments, in the length direction X, the fourth compartment 2017 is formed at an end of the container body 1.

The fourth compartment 2017 is located in the container body 1 and at the end of the container body 1 in the length direction X.

By forming the fourth compartment 2017 at the end of the container body 1, it is easier to mount the fourth compartment 2017 and also to reduce the interference of the fourth compartment 2017 with the battery cell 21 during maintenance.

Referring to FIG. 6 to FIG. 8 again, FIG. 8 is an arrangement view of the energy storage apparatus 100 according to some embodiments of the present application. In some embodiments, the battery compartment 11 has a first compartment door 111, the fourth compartment 2017 has a first access door 20171, and the first compartment door 111 and the first access door 20171 are located on a side in the width direction Y.

Walls of the container 10 in the length and height directions are walls for forming the first compartment door 111 and the first access door 20171. By forming the first compartment door 111, the battery 2 can be filled in or removed from the container 10 when the first compartment door 111 is opened. When the first compartment door 111 is closed, the first compartment door 111 can separate the battery 2 from the outside world, thereby reducing the risk of the external environment interfering with the battery 2. The first access door 20171 is formed on the same side as the first compartment door 111. By opening the first access door 20171, the main control module 2021 located in the fourth compartment 2017 can be maintained.

As an example, the energy storage apparatus 100 in FIG. 7 can be arranged according to the arrangement structure of the energy storage apparatus 100 in FIG. 8, so that the first access door 20171 and the first compartment door 111 of each energy storage apparatus 100 are located on both sides of the arrangement structure in the width direction Y, which is thus beneficial to the maintenance of the main control module 2021.

In FIG. 8, a distance between adjacent energy storage apparatuses 100 can be less than 300 mm to reduce the floor area of a plurality of energy storage apparatuses 100.

By arranging the first access door 20171 on the container 10, it is easier to maintain the main control module 2021 in the width direction Y, thereby making the maintenance of the main control module 2021 more convenient.

In some embodiments, referring to FIG. 6 again, the general control module is located in the third compartment 2016. The third compartment 2016 includes a fifth connector 10f, and the fifth connector 10f is electrically connected to the general control module; each container 10 includes a sixth connector 10i and the main control module 2021 electrically connected to the sixth connector 10i; and the fifth connector 10f is configured to cooperate with each sixth connector 10i.

It can be that the fifth connector 10f is directly connected to the sixth connector 10i to achieve cooperation between the fifth connector 10f and the sixth connector 10i. For example, the fifth connector 10f can cooperate with each sixth connector 10i by insertion. It can be that the fifth connector 10f is fixed to the third compartment 2016, and the sixth connector 10i is movably arranged on the container body 1; or the fifth connector 10f is movably arranged on the third compartment 2016, and the sixth connector 10i is fixedly arranged on the container body 1; or the fifth connector 10f and the sixth connector 10i are movably arranged on the third compartment 2016 and the container body 1, respectively. The fifth connector 10f can include a plurality of connecting parts, and the connecting parts are correspondingly connected to the sixth connectors 10i one to one, so that the fifth connector 10f is connected to a plurality of sixth connectors 10i.

It can also be that the fifth connector 10f and the sixth connector 10i are connected by a connecting member, and the connecting member can be a cable. It can be that the fifth connector 10f and the sixth connector 10i are fixed to the third compartment 2016 and the container body 1, respectively; or the fifth connector 10f is fixed to the third compartment 2016, or the sixth connector 10i is movably arranged on the container body 1; or the fifth connector 10f is movably arranged on the third compartment 2016, and the sixth connector 10i is fixedly arranged on the container body 1; or the fifth connector 10f and the sixth connector 10i are movably arranged on the third compartment 2016 and the container body 1, respectively.

As shown in FIG. 6, the fifth connector 10f is mounted in the third compartment 2016, and the fifth connector 10f is electrically connected to the general control module in the general control box 2022. The sixth connector 10i electrically connected to the main control module 2021 is mounted in the fourth compartment 2017. The sixth connector 10i and the fifth connector 10f are connected by a cable.

The connecting cable of the fifth connector 10f and the sixth connector 10i penetrates through the inside of the fourth compartment 2017 located in the container 10.

The fifth connector 10f cooperates with the sixth connector 10i, so that the general control module and the main control module 2021 can be quickly connected, thereby facilitating mounting between the third compartment 2016 and the container 10.

In some embodiments, at least part of the control compartment 20 is hung on an outer container wall of at least one container body 1 in the length direction X or the width direction Y.

It can be that the control compartment 20 is hung on the outer container wall of only one container body 1 in the length direction X, or the control compartment 20 is hung on the outer container wall of only one container body 1 in the width direction Y. It can also be that the control compartment 20 is hung on the outer container walls of a plurality of container bodies 1 in the length direction X, or the control compartment 20 is hung on the outer container walls of a plurality of container bodies 1 in the width direction Y, where two container bodies 1 may be provided.

The control compartment 20 and the container body 1 can be fixed by bolts, connected by hinges, fixed by welding, or fixed by a frame.

It can be that the whole control compartment 20 is hung on the outer container wall of the container body 1, or only part of the control compartment 20 is hung on the outer container wall of the container body 1.

The separate design of the control compartment 20 and the container 10 allows for the independent manufacturing and transportation of both, which helps reduce the transportation costs of energy storage devices 100.

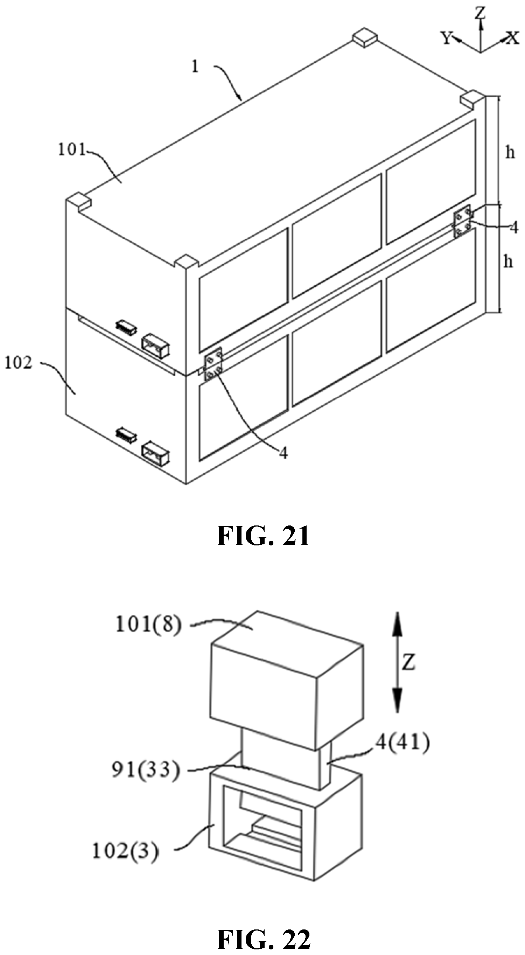

In some embodiments, referring to FIG. 21, the control compartment 20 and the container 10 are arranged separate from each other and are connected.

The separate design of the control compartment 20 and the container 10 allows for the independent manufacturing and transportation of both, which helps reduce the transportation costs of energy storage devices 100.

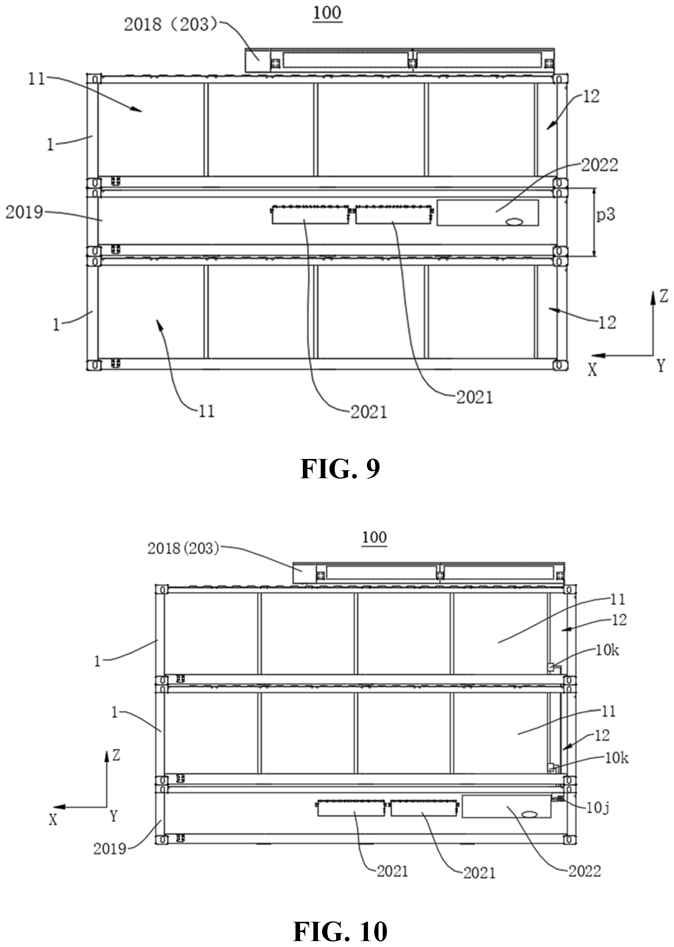

Referring to FIG. 9, FIG. 9 is a schematic structural view of an energy storage apparatus 100 (a compartment body 201 includes a fifth compartment 2018 and a sixth compartment 2019) according to some embodiments of the present application. In some embodiments, the compartment body 201 includes a fifth compartment 2018 and a sixth compartment 2019 arranged separate from the fifth compartment 2018, the thermal management module 203 is accommodated in the fifth compartment 2018, the fifth compartment 2018 is located at the top of the topmost container 10, and the control module 202 is accommodated in the sixth compartment 2019.

It can be that a size of the fifth compartment 2018 in the length direction X is consistent with the size of the standard container in the length direction, a size of the fifth compartment 2018 in the width direction Y is consistent with the size of the standard container in the width direction, and a size of the fifth compartment 2018 in the height direction Z is less than the size of the standard container in the height direction.

It can also be that the sizes of the fifth compartment 2018 in the length direction X, in the width direction Y, and in the height direction Z are all less than the sizes of the standard container.

The fifth compartment 2018 may be a compartment with a frame structure 13, and the thermal management module 203 is accommodated inside the compartment. The fifth compartment 2018 may be a shell 211 of the thermal management module 203. When the thermal management module 203 is transported separately, a plurality of thermal management modules 203 can be accommodated and transported through the standard container.

In the above embodiments, the thermal management module 203 can be arranged separately from the control module 202, and the thermal management module 203 is arranged on the top of the topmost container 10, so that the thermal management module 203 does not occupy the weight and volume of the container 10, and can be manufactured and transported separately from the container 10, which helps to reduce the transportation cost of the energy storage apparatus 100. The control module 202 is accommodated in the sixth compartment 2019, thereby reducing the interference between the control module 202 and the thermal management module 203.

In some embodiments, the sixth compartment 2019 is located at the bottom of the bottommost container 10.

Referring to FIG. 10, FIG. 10 is a schematic structural view of an energy storage apparatus 100 (a compartment body 201 includes a fifth compartment 2018 and a sixth compartment 2019) according to some other embodiments of the present application. In some embodiments, the sixth compartment 2019 is located between two adjacent containers 10 in the height direction Z.

In the above embodiments, the sixth compartment 2019 is located at the bottom of the bottommost container 10 or located between two adjacent containers 10, so that the sixth compartment 2019 does not occupy the weight and volume of the container 10, and the sixth compartment 2019 can be manufactured and transported separately from the container 10, which helps to reduce the transportation cost of the energy storage apparatus 100.

Referring to FIG. 9 and FIG. 10 again, in some embodiments, a size of the sixth compartment 2019 in the length direction X is consistent with the size of the standard container in the length direction X, a size of the sixth compartment 2019 in the width direction Y is consistent with the size of the standard container in the width direction Y, and a size of the sixth compartment 2019 in the height direction Z is 1/p3 of the size of one standard container in the height direction Z, where p3 is a positive integer, and 2≤p3≤5.

The size of the sixth compartment 2019 in the height direction Z can be 1/2, 1/3, 1/4 or 1/5 of the size of one standard container in the height direction Z. For example, when the size of the sixth compartment 2019 in the height direction Z is 1/3 of the size of one standard container in the height direction Z, the size of the sixth compartment 2019 in the height direction Z multiplied by 3 is equal to the size of one standard container in the height direction Z.

By setting that the size of the sixth compartment 2019 in the height direction Z is 1/p3 of the size of one standard container in the height direction Z, when the sixth compartment 2019 is placed for transportation, the height of p3 control compartments 20 is consistent with the height of one standard container, so that p3 sixth compartments 2019 can be stacked, which facilitates the placement and transportation of the sixth compartment 2019 and saves the transportation costs of the control compartment 20.

In some embodiments, the sixth compartment 2019 includes a seventh connector 10j, and the seventh connector 10j is electrically connected to the control module 202; each container 10 includes an eighth connector 10k, and the eighth connector 10k is electrically connected to the battery cell 21; and the seventh connector 10j is configured to cooperate with each eighth connector 10k.

It can be that the seventh connector 10j is directly connected to the eighth connector 10k to achieve cooperation between the seventh connector 10j and the eighth connector 10k. For example, the seventh connector 10j can cooperate with each eighth connector 10k by insertion. It can be that the seventh connector 10j is fixed to the sixth compartment 2019, and the eighth connector 10k is movably arranged on the container body 1; or the seventh connector 10j is movably arranged on the sixth compartment 2019, and the eighth connector 10k is fixedly arranged on the container body 1; or the seventh connector 10j and the eighth connector 10k are movably arranged on the sixth compartment 2019 and the container body 1, respectively. The seventh connector 10j can include a plurality of connecting parts, and the connecting parts are correspondingly connected to the eighth connectors 10k one to one, so that the seventh connector 10j is connected to a plurality of eighth connectors 10k.

It can also be that the seventh connector 10j and the eighth connector 10k are connected by a connecting member, and the connecting member can be a cable. It can be that the seventh connector 10j and the eighth connector 10k are fixed to the sixth compartment 2019 and the container body 1, respectively; or the seventh connector 10j is fixed to the sixth compartment 2019, and the eighth connector 10k is movably arranged on the container body 1; or the seventh connector 10j is movably arranged on the sixth compartment 2019, and the eighth connector 10k is fixedly arranged on the container body 1; or the seventh connector 10j and the eighth connector 10k are movably arranged on the sixth compartment 2019 and the container body 1, respectively.

As an example, as shown in FIG. 10, the seventh connector 10j is mounted in the sixth compartment 2019, the eighth connector 10k is mounted in each container body 1, and the seventh connector 10j and the eighth connector 10k are connected by a cable.

The seventh connector 10j cooperates with the eighth connector 10k, so that the control module 202 and the battery cell 21 can be rapidly connected, thereby making mounting of the sixth compartment 2019 and the container 10 more convenient.

In some embodiments, the container body 1 includes a battery compartment 11, the battery cell 21 is accommodated in the battery compartment 11, the sixth compartment 2019 is located in the container body 1, and the sixth compartment 2019 is located at an end of the container body 1 in the length direction X.

All the control modules 202 are located in the sixth compartment 2019, and the sixth compartment 2019 and the battery compartment 11 are independent of each other in the container body 1.

By arranging the sixth compartment 2019 at the end of the container body 1 in the length direction X, the battery compartment 11 and the control module 202 are made to be independent of each other, thereby reducing the risk of interference between the battery compartment 11 and the control module 202.

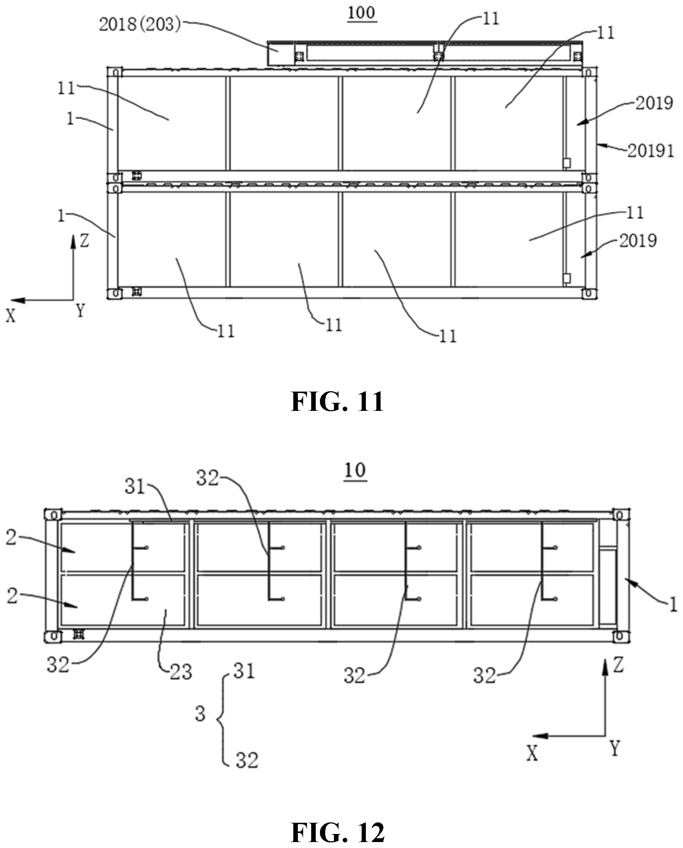

In some embodiments, referring to FIG. 11, FIG. 11 is a schematic structural view of an energy storage apparatus 100 (a compartment body includes a fifth compartment 2018 and a sixth compartment 2019) according to yet some other embodiments of the present application. The sixth compartment 2019 has a second access door 20191, and the second access door 20191 is located on a side of the container body 1 in the length direction X.

The second access door 20191 is located on the side of the container body 1 in the length direction X. Four energy storage apparatuses 100 can be arranged in a " 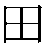 " shape, so that the second access doors of the energy storage apparatuses 100 are respectively located on both sides of the " 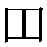 "-shaped structure in the length direction X or the width direction Y.

The second maintenance door 20191 is arranged at the end of the container body 1 in the length direction X, and the control module 202 is located in the sixth compartment 2019, so that the control module 202 is maintained at the end of the container body 1 in the length direction X.

In some embodiments, the container 10 includes a battery compartment 11 and a wiring harness compartment 12, the plurality of battery cells 21 are accommodated in the battery compartment 11, and the wiring harness compartment 12 is located in the container body 1 and arranged in the length direction X with the battery compartment 11. The wiring harness compartment 12 is provided with an opening, and at least part of a connecting wiring harness between the container 10 and the control compartment 20 passes through the opening.

Taking FIG. 9 and FIG. 10 as examples, top walls and bottom walls of the wire harness compartments 12 of two container bodies 1 are each provided with the opening, so that the cable or pipeline can be connected to the control compartment 20 through the wire harness compartment 12 and the openings in the top wall and the bottom wall.

In some embodiments, the cable connecting the first connector 10b and the second connector 10c, and the pipeline connecting the third connector 10d and the fourth connector 10e both penetrate through the wire harness compartment 12.

By arranging the wiring harness compartment 12, at least part of the connecting wiring harness between the container 10 and the control compartment 20 passes through the wiring harness compartment 12, thereby reducing the risk of the connecting wiring harnesses between the container 10 and the control compartment 20 being exposed outside the container 10 and consequently damaged.

Referring to FIG. 12, FIG. 12 is a schematic structural view of a container 10 according to some embodiments of the present application. In some embodiments, the container 10 includes a plurality of batteries 2, the plurality of batteries 2 are arranged in rows and columns, a plurality of batteries 2 in each row are arranged in the length direction X, a plurality of batteries 2 in each column are arranged in the height direction Z, and each battery 2 includes a thermal management component 22 and a plurality of battery cells 21. The container 10 also includes a main pipeline 31 and a plurality of branch lines 32, the main pipeline 31 is in communication with the thermal management module 203 and each branch line 32, and each branch line 32 is in communication with thermal management components 22 of the plurality of batteries 2 in one column.

It can be understood that the main pipeline 31 and the plurality of branch lines 32 of the container 10 constitute a pipeline system 3. Each container 10 has two pipeline systems 3 as a liquid input channel and a liquid output channel of the thermal management component 22. The structures of the pipeline systems 3 are the same. Hereinafter, a liquid input pipeline of the container 10 is used as an example for description.

As an example, as shown in FIG. 12, eight batteries 2 are in the container 10, and the eight batteries 2 are arranged in two rows and four columns. A main pipeline 31 in communication with the thermal management module 203, and four branch lines 32 all in communication with the main pipeline 31 are in the container 10. Each branch line 32 is in communication with the thermal management components 22 of two batteries 2 located in the same column.

The main pipeline 31 is in communication with the thermal management module 203, the thermal management module 203 can supply fluid to the main pipeline 31, and the main pipeline 31 supplies the fluid to the plurality of branch lines 32, so that the temperature of the fluid entering the thermal management component 22 is more uniform, thereby reducing the risk of temperature runaway of the battery 2.

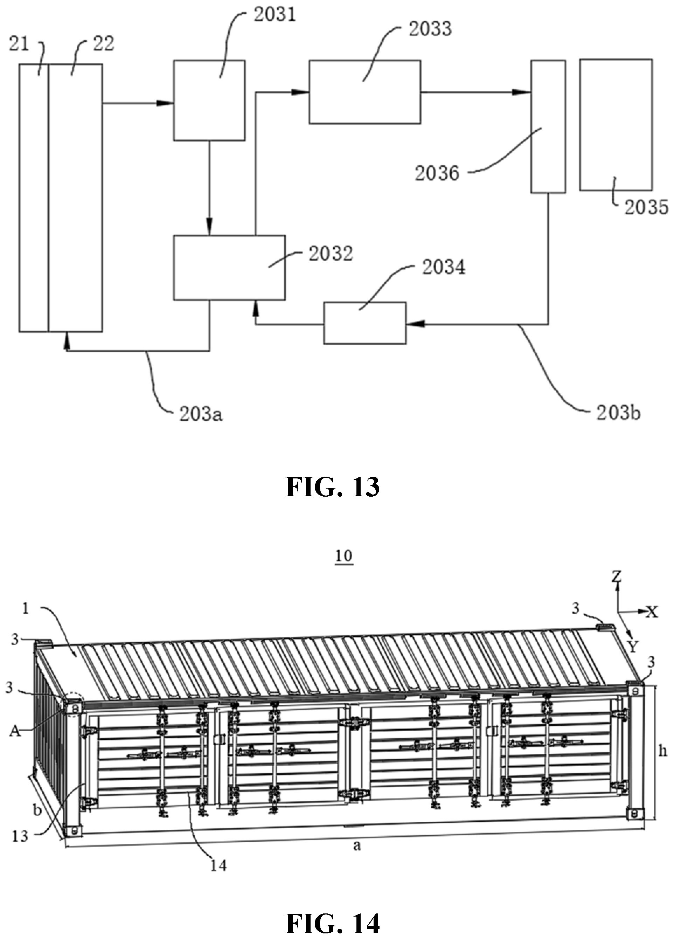

Referring to FIG. 13, FIG. 13 is a schematic structural view of a thermal management module 203 according to some embodiments of the present application. In some embodiments, the container 10 includes a plurality of batteries 2, the plurality of batteries 2 are arranged in rows and columns, a plurality of batteries 2 in each row are arranged in the length direction X, and a plurality of batteries 2 in each column are arranged in the height direction Z; each battery 2 includes a thermal management component 22 and a plurality of battery cells 21; the thermal management module 203 includes a pumping apparatus 2031, a first heat exchanger 2032, a compressor 2033, a throttling apparatus 2034, and a second heat exchanger 2036; the pumping apparatus 2031, the first heat exchanger 2032, the thermal management component 22, and the pumping apparatus 2031 are sequentially connected to form a cooling circulation loop; and the compressor 2033, the second heat exchanger 2036, the throttling apparatus 2034, the first heat exchanger 2032, and the compressor 2033 are sequentially connected to form a coolant circulation loop 203b. The components of the thermal management module 203 are independent of the battery 2, thereby reducing the risk of interference between the thermal management module 203 and the battery 2.

The thermal management module 203 includes the pumping apparatus 2031 and the first heat exchanger 2032. The pumping apparatus 2031, the first heat exchanger 2032, the thermal management component 22, and the pumping apparatus 2031 are sequentially connected to form a cooling liquid circulation loop 203a.

It should be noted that the pumping apparatus 2031 (also known as a water pump) is a component configured to transport a cooling liquid. The first heat exchanger 2032 is a component configured to perform heat exchange with the cooling liquid flowing through it. The first heat exchanger 2032 can be, but is not limited to, a plate heat exchanger, a shell-and-tube heat exchanger, an air cooler, a spiral plate heat exchanger, a heat exchange tube bundle, etc. The cooling liquid can be, but is not limited to, a mixture of ethylene glycol and water.

Under the conveying action of the pumping apparatus 2031, the cooling liquid can circularly flow in the cooling liquid circulation loop 203a and circularly flow through the pumping apparatus 2031, the first heat exchanger 2032, the thermal management component 22, and the pumping apparatus 2031. The above connection can be a direct connection or an indirect connection via a pipeline.

By adopting the above scheme, the cooling liquid can circularly flow through the thermal management component 22 to directly exchange heat with the battery cell 21 and cool the battery cell 21; the cooling liquid after exchanging heat with the battery cell 21 can also circularly flow through the first heat exchanger 2032 and exchange heat with the first heat exchanger 2032, to exchange the heat exchanged from the battery cell 21 to the first heat exchanger 2032, so that the cooling liquid cools down.

In some embodiments of this application, the thermal management module 203 further includes a compressor 2033, a throttling apparatus 2034, and a second heat exchanger 2036. The compressor 2033, the second heat exchanger 2036, the throttling apparatus 2034, the first heat exchanger 2032, and the compressor 2033 are sequentially connected to form a coolant circulation loop 203b.

It should be noted that the above connection can be a direct connection or an indirect connection via a pipeline. The compressor 2033 is a component that provides power for circulation of a coolant and is capable of cooling the coolant. The throttling apparatus 2034 is a component configured for cooling and pressure reduction. The throttling apparatus 2034 can be, but is not limited to, a throttling valve, an expansion valve, etc. The second heat exchanger 2036 is a component configured to perform heat exchange with the coolant flowing through it. The second heat exchanger 2036 can be, but is not limited to, a plate heat exchanger, a shell-and-tube heat exchanger, an air cooler, a spiral plate heat exchanger, a heat exchange tube bundle, etc. The coolant has a low boiling point and low evaporation heat, and can evaporate and condense at relatively low temperatures. The coolant can achieve a cooling effect by absorbing and releasing heat. The coolant can be, but is not limited to, Freon, ammonia, carbon dioxide, R134A (1,1,1,2-tetrafluoroethane), R410A (Freon R-410A refrigerant), etc.

The first heat exchanger 2032 is arranged in both the cooling liquid circulation loop 203a and the first coolant circulation loop 203b. A cooling liquid flow channel and a coolant flow channel are arranged in the first heat exchanger 2032. The cooling liquid flow channel participates in forming the cooling liquid circulation loop 203a, and the cooling liquid flows in the cooling liquid flow channel. The coolant flow channel participates in forming the first coolant circulation loop 203b, and the coolant flows in the coolant flow channel. The cooling liquid flow channel and the coolant flow channel are not in communication with each other so that the cooling liquid and the coolant are not mixed. In the first heat exchanger 2032, the cooling liquid and the coolant can exchange heat, especially the heat of the cooling liquid can be exchanged to the coolant, so that the first heat exchanger 2032 can cool the cooling liquid flowing through it.

The thermal management module 203 also includes a cooling fan 2035, and the cooling fan 2035 dissipates heat from the second heat exchanger 2036.

In some embodiments, the container 10 includes the battery cells 21 arranged in the container body 1, with a weight of a single battery cell 21 ranging from 5 kg to 60 kg. The weight of the battery cell 21 is appropriate, so that a suitable number of batteries 2 can be placed in the container body 1, thereby meeting transportation requirements while maintaining a moderate energy density.

In some embodiments, a weight of the container 10 is M, where M≤35 tons, so that lifting by a relevant lifting apparatus is facilitated when the container 10 is lifted and the transfer of the container 10 is facilitated.

For example, the weight of the container 10 can be any point value of 10 tons, 15 tons, 20 tons, 25 tons, 30 tons, and 35 tons, or a point value between any two of the values.

In some embodiments, the weight of the container 10 is M, and the total weight of the battery cells 21 in the container body 1 is M1, where (M1/M)×100%≥60%.

(M1/M)×100% can be 60%, 61%, 62%, 63%, 64%, 65%, 66%, 67%, 68%, 69%, 70%, 71%, 72%, 73%, 74%, 75%, 76%, 77%, 78%, 79%, 80%, 90%, or the like.

In this way, on the one hand, the weight ratio of the battery cells 21 per unit volume of the container 10 can be increased, thereby increasing the power per unit volume of the container 10; and on the other hand, during transportation of the container 10, more battery cells 21 that contribute to energy storage and are difficult to produce at the destination are transported, while other structures can be produced at a place closer to the destination without needing to be transported or with reduced transportation. After the container 10 is assembled into the energy storage apparatus 100, it is beneficial to reduce the transportation costs of the assembled energy storage apparatus 100.

In some embodiments, (M1/M)×100%≥80%.

(M1/M)×100% can be 80%, 81%, 82%, 83%, 84%, 85%, 86%, 87%, 88%, 89%, 90%, or the like.

Therefore, the transportation cost of the assembled energy storage apparatus 100 can be further reduced.

In some embodiment, the weight of the container 10 is M, and a plurality of batteries 2 are arranged in the container body 1; and the battery 2 includes an accommodating box 23 (shown in FIG. 12) and a plurality of battery cells 21, the plurality of battery cells 21 are accommodated in the accommodating box 23, and a total weight of the batteries 2 is M2, where 70%≤(M2/M)×100%≤90%.

The accommodating box 23 may include two parts that cover each other, such as an upper cover and a bottom plate, or an upper cover and a lower container body, and the two parts together form an accommodating space for accommodating the battery cell. The thermal management component may be part of the accommodating box 23 or the thermal management component may be located in the accommodating space.

(M2/M)100% can be any point value of 70%, 71%, 72%, 73%, 74%, 75%, 76%, 77%, 78%, 79%, 80%, 81%, 82%, 83%, 84%, 85%, 86%, 87%, 88%, 89%, and 90%, or a point value between any two of the values.

When (M2/M)×100%≥70%, the weight ratio of the battery 2 per unit volume of the container 10 can be increased, thereby increasing the energy density of the container 10; and when (M2/M)×100%≤90%, the structural strength of the container 10 can be maintained. Therefore, when 70%≤(M2/M)×100%≤90%, both the energy density and structural strength of the container 10 can be taken into account, making the container 10 more practical.

In some embodiments, a volume of the container 10 is V, and a total volume of the battery cells 21 in the container body 1 is V1, where (V1/V)×100%≥30%.

(V1/V)×100% can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, 70%, or the like.

On the one hand, the volume ratio of the battery cells 21 per unit volume of the container 10 can be increased, thereby increasing the power per unit volume of the container 10; and on the other hand, during transportation of the container 10, more battery cells 21 that contribute to energy storage and are difficult to produce at the destination are transported, while other functional elements such as a control element of the energy storage apparatus 100 can be produced at a place closer to the destination without needing to be transported or with reduced transportation. After the container 10 is assembled into the energy storage apparatus 100, it is beneficial to reduce the transportation costs of the assembled energy storage apparatus 100.

In some embodiments, (V1/V)×100%≥50%.

(V1/V)×100% can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, 90%, or the like.

This further helps to reduce the transportation costs of the assembled energy storage apparatus 100.

In some embodiments, the volume of the container 10 is V, and a plurality of batteries 2 are arranged in the container body 1; and the battery 2 includes an accommodating box 23 and a plurality of battery cells 21, the plurality of battery cells 21 are accommodated in the accommodating box 23, and a total volume of the batteries 2 is V2, where 50%≤(V2/V)×100%≤80%.

(V2/V)×100% can be any point value of 50%, 51%, 52%, 53%, 54%, 55%, 56%, 57%, 58%, 59%, 60%, 61%, 62%, 63%, 64%, 65%, 66%, 67%, 68%, 69%, 70%, 75%, and 80%, or a point value between any two of the values.

When (V2/V)×100%≥50%, the volume ratio of the battery 2 per unit volume of the container 10 can be increased, thereby increasing the energy density of the container 10; and when (V2/V)×100%≤80%, the container 10 can have structural members of a sufficient volume to maintain the structural strength of the container 10. Therefore, when 50%≤(V2/V)×100%≤80%, both the energy density and structural strength of the container 10 can be taken into account, thereby making the container 10 more practical.

In some embodiments, in the height direction Z, heights of some containers 10 in the m containers 10 are not equal to heights of the other containers 10. This facilitates improving the flexibility of the capacity of the container, thereby meeting diverse needs.

It can be that the sum of heights of the containers 10 with different sizes in the height direction Z is right equal to the size of one or more containers 10. For example, the sizes of three containers 10 in the height direction Z are different, and the sum of the sizes of the three containers 10 in the height direction Z is equal to the sum of the sizes of two standard containers in the height direction Z. For example, the sizes of five containers 10 in the height direction Z are different, and the sum of the sizes of the five containers 10 in the height direction Z is equal to the sum of the sizes of three standard containers in the height direction Z.

In some embodiments, the sizes of the m containers 10 in the height direction Z are equal. Therefore, it facilitates simplifying the manufacturing process and reducing the costs.

In some embodiments, the standard container is a 20-foot standard container, and a height of the standard container is 2896 mm, 2591 mm or 2438 mm. That is, the sum of the sizes of m1 containers 10 in the height direction Z is the height of the 20-foot standard container, which is 2896 mm, 2591 mm, or 2438 mm.

Referring to FIG. 14 and FIG. 15, FIG. 14 is a schematic structural view of a container 10 according to some other embodiments of the present application, and FIG. 15 is an exploded structural view of a battery cell 21 in the container 10 according to an embodiment of the present application. The battery cell 21 described in an embodiment of the present application includes an electrode assembly 212 and a shell 211. The shell 211 has an accommodating cavity 211a, and the electrode assembly 212 is accommodated in the accommodating cavity 211a.

The shell 211 includes a housing 2111 and an end cap 2112, when the battery cell 21 is assembled, the electrode assembly 212 can be first placed into the accommodating cavity 211a, then the end cap 2112 covers the housing 2111, and then an electrolyte is injected into the accommodating cavity 211a through an electrolyte injection port in the end cap 2112.

Optionally, the shell 211 can further be configured to accommodate an electrolyte, such as an electrolyte. The shell 211 can have various structural forms.

The shell 211 can have various shapes, such as a cylinder or a cuboid. The shape of the shell 211 can be determined according to a specific shape of the electrode assembly 212. For example, if the electrode assembly 212 is of a cylindrical structure, the shell 211 can be selected to have a cylindrical structure. If the electrode assembly 212 is of a cuboid structure, the shell 211 can be selected to have a cuboid structure. In FIG. 15, as an example, the shell 211 and the electrode assembly 212 are each of a cuboid structure.

The shell 211 may be made of various materials, such as copper, iron, aluminum, stainless steel, and an aluminum alloy, which is not particularly limited in the embodiment of the present application.

One or more electrode assemblies 212 can be accommodated in the shell 211. In FIG. 15, two electrode assemblies 212 are accommodated in the shell 211.

As shown in FIG. 14 and FIG. 15, embodiments of the present application provide a container 10, including a container body 1 and a battery cell 21, where the battery cell 21 is accommodated in the container body 1, a size a of the container 10 in the length direction X and a size b of the container 10 in the width direction Y are consistent with those of a standard container, and a size h of the container 10 in a height direction Z is less than a size H of one standard container in the height direction Z of the container 10.

If the container 10 includes battery cells 21, the container 10 can include a plurality of battery cells 21, and the plurality of battery cells 21 are connected in series or in parallel to form an energy storage unit corresponding to the container 10. In use, a plurality of containers 10 can be connected in series or in parallel to obtain an energy storage apparatus 100 with corresponding power.

If the container 10 includes a battery cell 21, the container 10 can only include the battery cell 21, or related functional elements such as a control element, a fire protection element, etc. may be integrated in the container 10.

During transportation, the size of the container 10 needs to be less than or equal to the size of the standard container. During transportation, the standard container may have the size of the standard container, such as 20 feet, 30 feet, 40 feet or 45 feet, which meet corresponding standards, with the length, width and height respectively having corresponding sizes.

For example, according to GB/T 1413-2008, GB/T 1413-2023 and internationally standard sizes, for a standard container with a length of 6058 mm, the size H thereof in the height direction Z can be 2591 mm, 2438 mm, less than 2438 mm, or 2896 mm, etc. For the standard container with the length of 9125 mm, the size H thereof in the height direction Z can be 2896 mm, 2591 mm, less than 2438mm, or 2438 mm, etc.

The size a in the length direction X and the size b in the width direction Y of the container 10 are consistent with those of a standard container. However, this does not mean that the length and width of the container 10 are exactly equal to the length and width of a standard container, rather, they are within the allowable error range, with a certain error. For example, referring to GB/T 1413-2008 and GB/T 1413-2023, the difference between the size a of the container 10 in the length direction X and the size of the standard container in the length direction X of the container 10 is within the range of ±10 mm, and the difference between the size b of the container 10 in the width direction Y and the size of the standard container in the width direction Y of the container 10 is within the range of ±5 mm.

If the size h of the container 10 in the height direction Z is less than the size H of one standard container in the height direction Z of the container 10, then 2h can be set to be less than or equal to H, or 3h can be set to be less than or equal to H, so that the height of a plurality of containers 10 stacked in the height direction Z is comparable to the height H of one standard container.

Of course, it can also be set that the sum of the sizes of three containers 10 after being stacked in the height direction Z is equal to the size H of two standard containers in the height direction Z, so that the sizes of the three containers 10 after being stacked in the height direction Z are comparable to the sizes of two standard containers in the height direction Z of the container 10.

In the container 10 provided by the embodiment of the present application, by setting the size h of the container 10 in the height direction Z to be less than the size of one standard container in the height direction Z, the size of the container 10 during transportation does not exceed the size of the corresponding standard container for sea or land transportation. This facilitates improving the convenience during transportation of the container 10 and reduces the transportation costs of the container 10 and the energy storage apparatus 100 using the container 10.

In some embodiments, |2h-H|≤5 mm.

For example, |2h-H| can be 0 mm, 1 mm, 2 mm, 3 mm, 4 mm or 5 mm.

On one hand, the height of one container 10 is equivalent to half the height of a standard container, which can reduce the use of structural members in the container body 1, thereby increasing the weight of the battery cell 21 per unit volume; on the other hand, when two containers 10 are stacked in the height direction Z, the sizes of the two stacked containers 10 is comparable to the size H of one standard container in the height direction Z. This facilitates making full use of the available space in the height direction Z during transportation, which reduces space waste in the container 10 during transportation, thereby helping to reduce the transportation costs.

In some embodiments, |3h-H|≤5 mm.

For example, |3h-H| can be 0 mm, 1 mm, 2 mm, 3 mm, 4 mm or 5 mm.

On one hand, the height of one container 10 is equivalent to one-third of the height of a standard container, which can reduce the use of structural members in the container body 1 and increase the weight of battery cells 21 per unit volume; on the other hand, when three containers 10 are stacked in the height direction Z, the sizes of the three stacked containers is comparable to the size H of one standard container in the height direction Z of the container 10. This facilitates making full use of the available space in the height direction Z during transportation, which reduces space waste in the container 10 during transportation, thereby helping to reduce the transportation costs.

In some embodiments, the weight of the container 10 is less than or equal to 45 tons.

For example, the weight of the container 10 can be 10 tons, 15 tons, 20 tons, 25 tons, 30 tons, 35 tons, 40 tons, 45 tons, or the like.

During the transfer process of the container 10, the container 10 needs to be lifted by a relevant lifting apparatus onto a container 10 or the ground. However, the load capacity of the relevant lifting apparatus is usually limited, usually with a maximum load capacity of 45 tons. By setting the weight of the container 10 to be less than or equal to 45 tons, it is easier to lift the container 10 by the relevant lifting apparatus in the lifting process, thereby facilitating the transfer of the container 10.

In some embodiments, the weight of the container 10 is M, and a total weight of the battery cells 21 in the container body 1 is M1, where M1/M≥60%.

M1/M≥60%, optionally, it can be set that M1/M≥60%, M1/M≥70%, M1/M≥80% or M1/M≥90%, for example, M1/M can be 60%, 61%, 62%, 63%, 64%, 65%, 66%, 67%, 68%, 69%, 70%, 71%, 72%, 73%, 74%, 75%, 76%, 77%, 78%, 79%, 80%, 85%, or the like.

It can be understood that the higher the weight of the battery cell 21 in the container body 1, the higher the energy storage capacity of the container 10 and the higher the energy density of the container 10. In this way, the weight ratio of the battery cell 21 in the container 10 per unit volume can be increased, thereby increasing the power of the container 10 per unit volume. During transportation of the container 10, more battery cells 21 that contribute to energy storage and are difficult to produce at the destination are transported, while other structures can be produced at a place closer to the destination without needing to be transported or with reduced transportation. After the container 10 is assembled into the energy storage apparatus 100, it is beneficial to reduce the transportation costs of the assembled energy storage apparatus 100.

In some embodiments, M1/M≥80%.

Optionally, M1/M can be 80%, 81%, 82%, 83%, 84%, 85%, 86%, 87%, 88%, 89%, 90%, or the like.

In this way, the volume ratio of the battery cells 21 in the container 10 per unit volume can be increased, thereby increasing the energy storage capacity per unit volume of the container 10. The container 10 can load more battery cells 21. During transportation of the container 10, more battery cells 21 that contribute to energy storage and are difficult to produce can be transported, without transportation or with reduced transportation of other relevant functional elements of the energy storage apparatus 100. After the container 10 is assembled into the energy storage apparatus 100, it is beneficial to reduce the transportation costs of the assembled energy storage apparatus 100.

In some embodiments, the volume of the container 10 is V, and a total volume of the battery cells 21 in the container body 1 is v, where v/V≥30%.

v/V≥30%, optionally, v/V≥40% can be set. For example, v/V can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, 70%, or the like.

It is understandable that the larger volume the battery cell 21 occupies in the container 10, the more beneficial it is to improve the energy storage capacity and energy density of the container 10. In this way, fewer or no related functional elements are loaded in the container 10, while as many battery cells 21 as possible can be loaded. Therefore, during transportation of the container 10, more battery cells 21 that contribute to energy storage and are difficult to produce at the destination can be transported, while other functional elements of the energy storage apparatus 100, such as a control element, can be produced at a place closer to the destination, without transportation or with reduced transportation. After the container 10 is assembled into the energy storage apparatus 100, it is beneficial to reduce the transportation costs of the assembled energy storage apparatus 100.

In some embodiments, v/V≥50%.

Optionally, v/V can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, 90%, or the like.

Thus, the container 10 can load more battery cells 21. During transportation of the container 10, more battery cells 21 that contribute to energy storage and are difficult to produce can be transported, without transportation or with reduced transportation of other relevant functional elements of the energy storage apparatus 100. After the container 10 is assembled into the energy storage apparatus 100, it is beneficial to further reduce the transportation costs of the assembled energy storage apparatus 100.

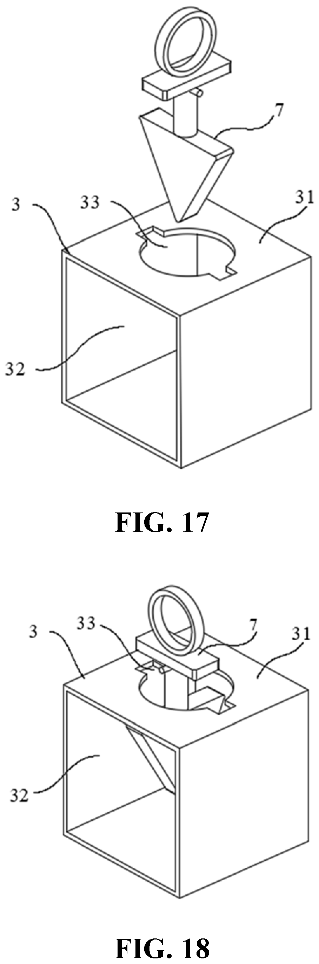

As shown in FIG. 14, FIG. 16, and FIG. 17, FIG. 16 is a partial enlarged view of a part A in FIG. 14; and FIG. 17 is a schematic structural view of part of one step of the container 10 according to the embodiment of the present application in a lifting process. In some embodiments, a top of the container body 1 has a plurality of lifting parts 22, and the plurality of lifting parts 22 are configured to cooperate with a lifting appliance 7 to lift the container 10.

If the lifting part 22 is located at the top of the container body 1, then the lifting part 22 can be located above the container body 1 in the height direction Z. The lifting part 22 can be integrally formed with the container body 1, or the relevant lifting part 22 can be specially arranged on the top of the container body 1.

Optionally, the container body 1 can have one or more lifting parts 22, and the plurality of lifting parts 22 can be arranged at a plurality of positions to facilitate the lifting of the container 10.

After the container 10 is lifted, the lifting part 22 on the top of container 10 can cooperate with the container 10 above in the height direction Z to achieve the limiting cooperation between two adjacent containers 10.

The lifting part 22 can be any structure capable of bearing the container 10 and cooperating with a hook and other structures of the lifting appliance 7, so as to lift the container 10 through the lifting appliance 7, thereby facilitating the stacking work of the container 10 in the height direction Z, or facilitating the lifting operation of the container 10 during transportation.

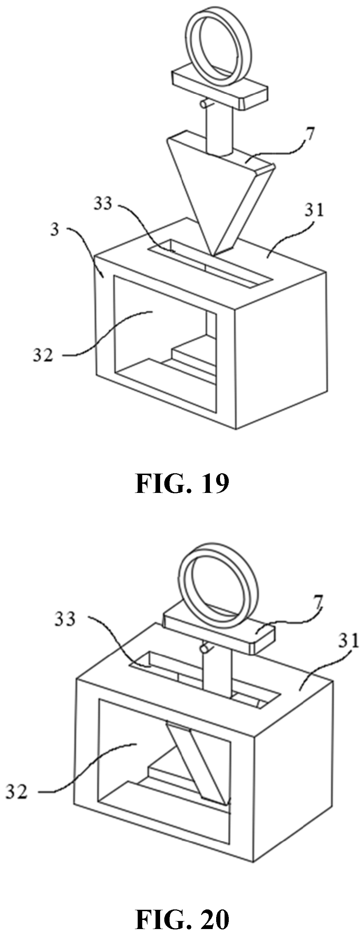

As shown in FIG. 17 to FIG. 20, FIG. 18 is a schematic structural view of part of another step of the container 10 according to the embodiment of the present application in the lifting process; FIG. 19 is a schematic structural view of part of one step of another container 10 according to an embodiment of the present application in a lifting process; and FIG. 20 is a schematic structural view of part of another step of another container 10 according to the embodiment of the present application in the lifting process. In some embodiments, the lifting part 22 includes a bearing part 221, an accommodating groove 222, and an opening 33, the accommodating groove 222 is located in the bearing part 221, the accommodating groove 222 and an outside of the accommodating groove 222 are in communication by the opening 33, and the opening 33 is located at a top of the bearing part 221.

During the lifting process, a lifting head of the lifting appliance 7 can enter the accommodating groove 222 through the opening 33, and then the lifting head of the lifting appliance 7 can be rotated to cooperate with the bearing part 221 to lift the container 10.

The shape of the opening 33 can be a long strip or a circle or even irregular, which can be set depending on the actual needs.

Therefore, the lifting part 22 is arranged to include the bearing part 221, the accommodating groove 222, and the opening 33. The structure of the lifting part 22 is simple, thereby facilitating the lifting of the container 10.

Optionally, as shown in FIG. 14, in some embodiments, the top of the container body 1 is provided with four lifting parts 22, and the four lifting parts 22 are arranged diagonally in pairs.

Thus, during the lifting of the container 10, the four lifting parts 22 are used for lifting, which helps to keep the container 10 in a stable position. This facilitates the coordination and alignment of the container 10 with the container 10 below, thereby facilitating the lifting and stacking operations of the container 10.

As shown in FIG. 22, FIG. 22 is a schematic structural view of cooperation of two adjacent containers 10 of an energy storage apparatus 100 according to an embodiment of the present application. In some embodiments, a bottom of the container body 1 has a limiting pin 41, and the limiting pin 41 is configured to cooperate with the container body 1 of an adjacent container 10 for limiting.

Thus, during the stacking of the containers 10 in the height direction Z, the limiting pins 41 can be used to limit the positions of two adjacent containers 10 in the height direction Z, thereby limiting displacement of two adjacent containers 10 in a direction intersecting with the height direction Z, and reducing the risk of relative shifting of the two adjacent containers 10.

In some embodiments, a plurality of batteries 2 placed in rows and columns are in the container body 1, and each battery 2 includes a plurality of battery cells 21.

The battery 2 can be in the structural form of a battery module or a battery pack. In this way, a plurality of battery cells 21 are connected in series or in parallel to form the battery 2. The plurality of batteries 2 are arranged in rows and columns and connected in series or in parallel to form a high-power energy storage unit. This facilitates making full use of the space in the container body 1 to accommodate more battery cells 21, thus helping to improve the power and energy density of the container 10.

Referring to FIG. 14 again, in some embodiments, the container body 1 includes a frame 13 and a maintenance door 14, and the maintenance door 14 is movably connected to the frame 13 to open or close the maintenance door 14.

The maintenance door 14 is movably connected to the frame 13, so the maintenance door 14 can be detached from the frame 13 or can be rotated relative to the frame 13 to open or close the maintenance door 14.

According to the arrangement, the container body 1 includes the maintenance door 14, and the maintenance door 14 is movably connected to the frame 13. In the event of a malfunction during operation of the container 10, it is easy to open the maintenance door 14 to facilitate the replacement or repair of components in the container 10.

As shown in FIG. 21, FIG. 21 is a schematic structural view of an energy storage apparatus 100 according to yet some other embodiments of the present application. The energy storage apparatus 100 according to the embodiments of the present application includes the container 10 according to any one of the above embodiments.

Because of using the container 10 according to any one of the above embodiments, the energy storage apparatus 100 according to the embodiments of the present application has the same technical effects, and will not be repeated here.

In some embodiments, the energy storage apparatus 100 includes m containers 10, where m is a positive integer greater than or equal to 2, the m containers 10 are stacked in the height direction Z, and |h1+...+hm-nH|≤5n (mm), where h1, ... and hm are the sizes of the m containers 10 in the height direction Z, and n is a positive integer.

The energy storage apparatus 100 includes m containers 10 stacked in the height direction Z. The sizes of each container 10 in the height direction Z are h1, ... and hm, respectively. Optionally, h1 to hm can all be equal or all unequal. Of course, at least two of h1 to hm can be set to be equal.

Typically, during transportation, the error range between the allowable height of the transported goods and the height of a single standard container is between -5 mm and 5 mm. This allows for full utilization of the allowable space in the height direction Z during transportation, while also meeting the requirements of the container 10 during transportation.

For example, it can be set that m is 2, n is 1, or m is 3, and n is 2. Of course, m and n can also be other combinations.

|h1+...+hm-nH|≤5n (mm) is set, which means that after the energy storage apparatus 100 is arranged to be stacked in the height direction Z, the size thereof is comparable to the sizes of n standard containers stacked in the height direction Z, and the absolute value of the height difference between the total height (h1+...+hm) of the energy storage apparatus 100 and the total height nH of the n standard containers stacked in the height direction Z is less than or equal to 5n mm. That is, after the plurality of containers 10 are stacked in the height direction Z, the size of the energy storage apparatus 100 formed after stacking is comparable to the sizes of the n standard containers stacked in the height direction Z, and the total height of the energy storage apparatus 100 and the size, in the height direction Z of the container 10, of the n standard containers stacked in the height direction Z meet the relevant error standard.

Therefore, setting |h1+...+hm-nH|≤5n (mm) is beneficial to make full use of the space that can be used for loading during transportation and to meet the relevant error requirements, so that the size, in the height direction Z, of m containers 10 stacked in the height direction Z is comparable to the size of n standard containers in the height direction Z of the container 10. Thus, it helps to further reduce the transportation costs of the energy storage apparatus 100.

In some embodiments, n≤8.

Optionally, n can be 8, 7, 6, 5, 4, 3, 2, or 1.

n is set to less than or equal to 8, that is, when the energy storage apparatus 100 is transported, the standard containers can be stacked up to 8 layers. Thus, it is easier to meet the relevant load requirements during transportation.

In some embodiments, m≤12.

Optionally, m can be 12, 11, 10, 9, 8, 7, 6, 5, 4, 3, or 2.

Setting m≤12 means that in the energy storage apparatus 100, up to 12 containers 10 can be stacked in the height direction Z. Thus, this helps to improve the structural stability of the energy storage apparatus 100 and can reduce the bearing capacity of the bottommost container 10, thereby facilitating reducing the bearing capacity of the container 10.

In some embodiments, m≤8.

Optionally, m can be 8, 7, 6, 5, 4, 3, or 2.

Thus, in the energy storage apparatus 100, up to 8 containers 10 can be stacked in the height direction Z, which facilitates further improving the structural stability of the energy storage apparatus 100, and further lowering the requirement for the bearing capacity of the container 10.

In some embodiments, two adjacent containers 10 in the height direction Z are welded, clapped, or connected by a fastener 4.

In some embodiments, in the height direction Z, at least part of the control compartment 20 and an adjacent container 10 thereof are welded, clamped, or connected by the fastener 4. This helps to reduce the risk of the control compartment and the container shifting relative to each other after stacking, thereby improving the structural stability of the energy storage apparatus.

The fastener 4 can be at least one of bolts, nuts, pins, screws, or rivets. Of course, the fastener 4 can also include a fastening plate or the like to fixedly connect two adjacent containers 10 in the height direction Z.

By connecting two adjacent containers 10 in the height direction Z via the fastener 4, the fastener 4 can be used to limit the two adjacent containers 10 in the height direction Z, which helps to reduce the risk of the two adjacent containers 10 shifting relative to each other after stacking, thereby helping to improve the structural stability of the energy storage apparatus 100.

As shown in FIG. 21 and FIG. 22, in some embodiments, the plurality of containers 10 include a first container 101 and a second container 102, the first container 101 is located above the second container 102, a bottom of the first container 101 is provided with a limiting pin 41, and a top of the second container 102 is provided with a limiting hole 91, and the limiting pin 41 is clamped in the limiting hole 91.

The containers 10 include the first container 101 and the second container 102. The same container 10 is the first container 101 relative to the container 10 below it, and is the second container 102 relative to the container 10 above it. That is, one container 10 can be both the first container 101 and the second container 102. In other words, the limiting pin 41 can be arranged at the bottom of one container 10, and the limiting hole 91 can be provided at the top thereof.

Thus, two adjacent containers 10 in the height direction Z can achieve, by means of cooperation of the limiting pin 41 and the limiting hole 91, the purpose of restricting relative shifting of the two adjacent containers 10 by a simple structure.

The limiting hole 91 in the top of the second container 102 can be the opening 33 for lifting the container 10. In this way, during the lifting stage of the container 10, the container 10 is lifted using the opening 33. After the container 10 is lifted, the opening 33 in the top of the container body 1 cooperates with the limiting pin 41 at the bottom of the adjacent upper container 10 to achieve the limiting of the two adjacent containers 10. This helps to simplify the structure of the container 10.

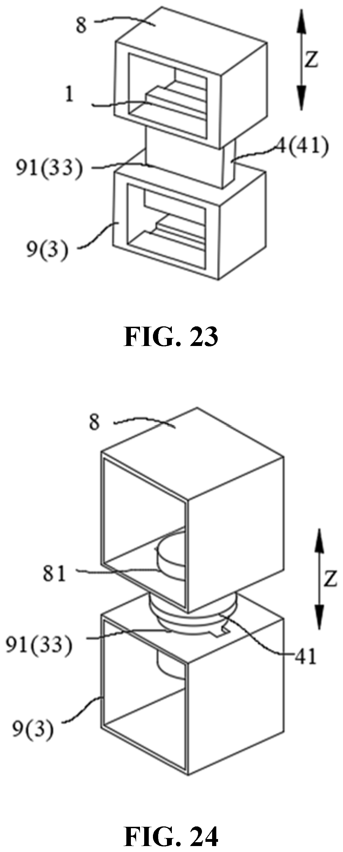

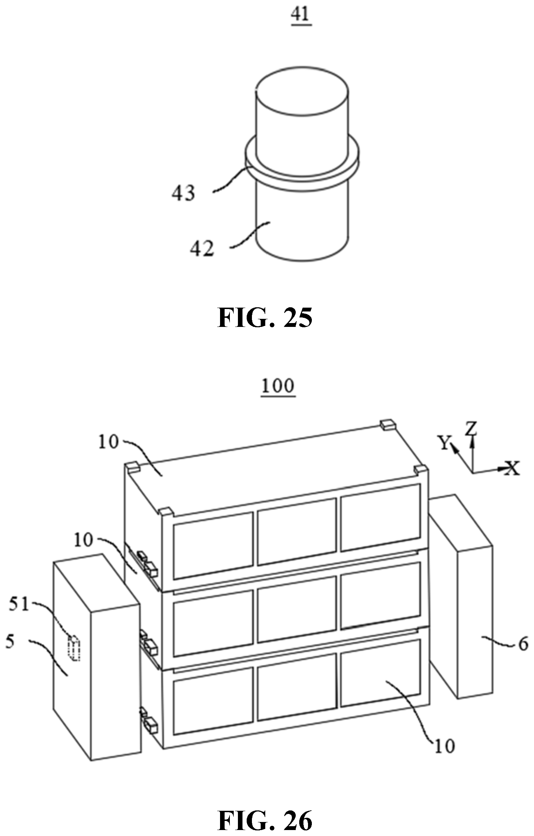

As shown in FIG. 23, FIG. 24, and FIG. 25, FIG. 23 is a schematic structural view of cooperation of two adjacent containers 10 of another energy storage apparatus 100 according to an embodiment of the present application; FIG. 24 is a schematic structural view of cooperation of two adjacent containers 10 of a still another energy storage apparatus 100 according to an embodiment of the present application; and FIG. 25 is a schematic structural view of a limiting pin 41 in FIG. 24. In some embodiments, the bottom of the first container 101 is provided with a first limiting member 8, the first limiting member 8 is provided with a limiting groove 81, the top of the second container 102 is provided with a second limiting member 9, the second limiting member 9 is provided with a limiting hole 91, and two ends of the limiting pin 41 are respectively clamped in the limiting groove 81 and the limiting hole 91.

The second limiting member 9 can be the aforementioned lifting part, and the limiting hole 91 can be the aforementioned opening 33. The limiting hole 91 can also be a hole formed in the container body 1 of the container 10.

As shown in FIG. 24 and FIG. 25, the limiting pin 41 can include a body 42 and a flange 43 arranged in the middle of the body 42. The flange 43 protrudes from the body 42 and surrounds the body 42. The size of the body 42 is less than the size of the limiting groove 81 and less than the size of the limiting hole 91, so that both ends of the body 42 extend into the limiting groove 81 and the limiting hole 91, respectively. The size of the flange 43 is larger than the size of the limiting groove 81 and larger than the size of the limiting hole 91, so that the flange 43 is clamped between the first limiting member 8 and the second limiting member 9.

Thus, during the stacking of the containers 10 in the height direction Z, the limiting pin 41 cooperates with the limiting groove 81 of the upper container 10 of the two adjacent containers 10 and with the limiting hole 91 of the lower container 10 of the two adjacent containers 10. In this way, the purpose of restricting the relative shifting of the two adjacent containers 10 is achieved through a simple structure.

As shown in FIG. 22, in some embodiments, the limiting pin 41 can be integrally formed with the first limiting member 8.

As shown in FIG. 26, FIG. 26 is a schematic structural view of another energy storage apparatus 100 according to an embodiment of the present application. In some embodiments, the energy storage apparatus 100 further includes an electrical compartment 5 and an electrical element 51, where the electrical element 51 is accommodated in the electrical compartment 5, the electrical compartment 5 is arranged outside the container 10, and the electrical element 51 is electrically connected to the battery cells 21 of the plurality of containers 10 of the energy storage apparatus 100.

The electrical element 51 is electrically connected to the battery cells 21 of the plurality of containers 10 of the energy storage apparatus 100. Thus, the electrical element 51 in the electrical compartment 5 is connected to the battery cells 21 of the plurality of containers 10 to control the normal operation of the battery cells 21 in the plurality of containers 10.

The electrical element 51 and the battery cell 21 are electrically connected, and the electrical connection between the electrical element 51 and the battery cell 21 can be a direct connection or an indirect connection, and can be a strong electric connection or a signal connection. For example, connection lines or signal acquisition components relevant to the electrical connection with the battery cell 21 can be arranged in the container 10, and a relevant connection interface can be arranged on the container body 1. The electrical element 51 can be electrically connected to the battery cell 21 through the relevant connection interface to collect working information of the battery cell 21 in a plurality of containers 10 and control the normal cyclic operation of the relevant battery cell 21.

The electrical element 51 can be one or more of a general control element or a main control element. The electrical element 51 is accommodated in the electrical compartment 5 and the electrical compartment 5 is arranged separately from the container 10 of the energy storage apparatus 100. In this way, the electrical element 51 does not occupy the weight and volume of the container 10 and can be manufactured and transported separately from the container 10, which helps to reduce the transportation costs of the energy storage apparatus 100.

In some embodiments, the electrical element 51 is the control module 202, and the electrical compartment 5 is part of the compartment body 201 accommodating the control module 202.

In some embodiments, the energy storage apparatus 100 may also include a fire-fighting element, and the fire-fighting element is configured to perform fire fighting on each container 10. The fire-fighting element may include fire extinguishers, fire pipes, nozzles, fire detectors, and other parts. The fire control module is configured to control the fire-fighting element to perform fire fighting on each container 10.

As shown in FIG. 26, in some embodiments, the energy storage apparatus 100 further includes a water-cooling unit 6, the water-cooling unit 6 is arranged outside the container 10, and the water-cooling unit 6 is configured to exchange heat with the battery cell 21 in a plurality of containers 10 of the energy storage apparatus 100.

In some embodiments, the water-cooling unit 6 is the thermal management module 203.

In this way, relevant pipelines can be arranged in the container 10, and pipeline interfaces can be formed in the container body 1. The water-cooling unit 6 is in communication with the pipeline interfaces of the plurality of containers 10, so as to supply high-temperature or low-temperature fluid to the container 10 through the water-cooling unit 6, thereby realizing heat exchange with the battery cell 21 in the container 10.

By arranging the water-cooling unit 6 outside the container 10, the water-cooling unit 6 does not take up the weight and volume of the container 10, and can be manufactured and transported separately from the container 10, which helps to further reduce the transportation costs of the energy storage apparatus 100.

As shown in FIG. 21 to FIG. 26, in some embodiments, the energy storage apparatus 100 comprises m containers 10, the limiting pin 41, the electrical compartment 5, the electrical element 51, and the water-cooling unit 6, where m is a positive integer greater than or equal to 2. The m containers 10 are stacked in the height direction Z, such that |h1 + ... + hm - nH| ≤ 5n (mm), where h1, ..., and hm are respectively the sizes of the m containers 10 in the height direction Z, and n is a positive integer. The container 10 includes a container body 1 and a battery cell 21, and the battery cell 21 is accommodated in the container body 1. The sizes of the container 10 in the length direction X and width direction Y are consistent with those of a standard container. The size h of the container 10 in the height direction Z is less than the size H of one standard container in the height direction Z of the container 10. The electrical element 51 is accommodated in the electrical compartment 5. The electrical element 51 is electrically connected to the battery cell 21 of the plurality of containers 10 of the energy storage apparatus 100. The water-cooling unit 6 is configured to perform heat exchange with the plurality of containers 10 of the energy storage apparatus 100. The weight of the container 10 is less than or equal to 45 tons. The weight of the container 10 is M, and the total weight of the battery cells 21 in the container body 1 is M1, where M1/M≥60%. The volume of the container 10 is V, and the total volume of the battery cells 21 in the container body 1 is v, where v/V≥30%. The container body 1 comprises a frame 13 and a maintenance door 14. The maintenance door 14 is movably connected to the frame 13 to open or close the maintenance door 14. The bottom of the container body 1 has the limiting groove 81. The limiting pin 41 cooperates with the upper limiting groove 81 of the two adjacent containers 10 and with the opening 33 of the lower container 10 to limit the relative displacement of the two adjacent containers 10 in the direction intersecting with the height direction Z.

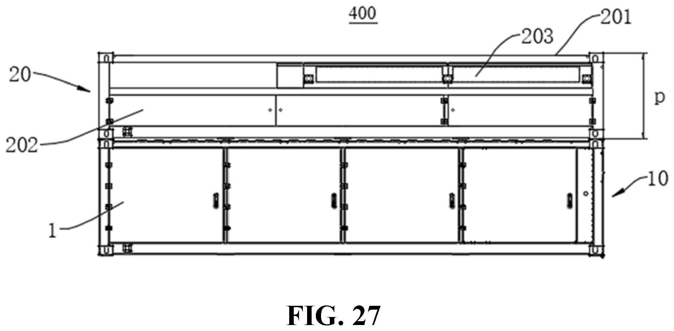

Referring to FIG. 27, FIG. 27 is a schematic structural view of an energy storage device 400 according to some embodiments of the present application. Embodiments of the present application provide an energy storage device 400, including a control compartment 20 and the container 10 according to any embodiment of the second aspect. The control compartment 20 includes a compartment body 201, a control module 202, and a thermal management module 203. The control module 202 is configured to perform electrical control on the battery cell 21, and the thermal management module 203 is configured to manage the temperature of the battery cell 21. The compartment body 201 and the container 10 are arranged in the height direction Z of the container 10, the thermal management module 203 and/or at least part of the control module 202 are/is arranged in the compartment body 201, a size of the compartment body 201 in a length direction X thereof is consistent with a size of a standard container in the length direction X, a size of the compartment body 201 in a width direction Y thereof is consistent with a size of the standard container in the width direction Y, and a size of the compartment body 201 in the height direction Z is 1/p of a size of the standard container in the height direction Z, where p is a positive integer, and 2≤p≤5.

The size of the compartment body 201 in the height direction Z can be 1/2, 1/3, 1/4 or 1/5 of the size of one standard container in the height direction Z. For example, when the size of the compartment body 201 in the height direction Z is 1/3 of the size of one standard container in the height direction Z, the size of the compartment body 201 in the height direction Z multiplied by 3 is equal to the size of one standard container in the height direction Z.

By arranging the control module 202, the control module 202 can control the input or output of electric energy of the battery cell 21, thereby achieving electric control over the battery cell 21. By arranging the thermal management module 203, the thermal management module 203 can manage the temperature of the battery cell 21, thereby reducing the risk of temperature runaway in the battery cell 21. The compartment body 201 can integrate the control module 202 and the thermal management module 203, thereby facilitating maintenance of the control module 202 and the thermal management module 203. The size of the compartment body 201 in the height direction Z is less than the size of one standard container in the height direction Z, and the size of the compartment body 201 during transportation does not exceed the size of the corresponding standard container for sea or land transportation in the height direction Z. This facilitates improving the convenience during transportation of the compartment body 201. The size of the compartment body 201 in the length direction X and the size of the compartment body 201 in the width direction Y are both consistent with those of the standard container, thereby ensuring that a horizontal area occupied by the compartment body 201 during transportation is consistent with that of the standard container. The sizes of p compartment bodies 201 in the height direction Z are the size of one standard container in the height direction Z, so that the space occupied by the p compartment bodies 201 when stacked is the same as that occupied by one standard container. This improves the utilization rate of the space where the compartment body 201 is placed, helps to make full use of an available space in the height direction Z during transportation, reduces space waste during transportation of the compartment body 201, and reduces the transportation costs of the compartment body 201 and the energy storage device 400 using the compartment body 201, thereby reducing the use costs of the energy storage device 400.

In some embodiments, part of the control module 202 is arranged in the compartment body 201, while the remaining part of the control module 202 is arranged in the container 10.

In some embodiments, the control module 202 includes a main control module 2021, a power distribution module, a general control module, and a fire control module, and the main control module 2021, the general control module, and the fire control module are all electrically connected to the power distribution module.

Embodiments of the present application provide an energy storage system 2000, including a power conversion apparatus and the energy storage apparatus 100 according to any one of the above embodiments or the energy storage device 400 according to any one of the above embodiments, where the power conversion apparatus is configured to electrically connect a power generation apparatus 3000 and the energy storage apparatus 100, the container 10 or the energy storage device 400.

Embodiments of the present application provide a charging network 1000, including a charging pile 200, and the energy storage apparatus 100 according to any one of the above embodiments or the energy storage device 400 according to any one of the above embodiments, where the charging pile 200 is electrically connected to the energy storage apparatus 100, the container 10 or the energy storage device 400, and the energy storage apparatus 100, the container 10 or the energy storage device 400 is configured to provide electric energy for the charging pile 200.

Referring to FIG. 3 again, embodiments of the present application provide an energy storage apparatus 100, including the container 10 and the control compartment 20. Two containers 10 are provided, the two containers 10 are arranged in the height direction Z of the container 10, the container 10 includes a container body 1 and a battery cell 21, and the battery cell 21 is accommodated in the container body 1. The control compartment 20 includes a compartment body 201, a control module 202, and a thermal management module 203. The control module 202 and the thermal management module 203 are accommodated in the compartment body 201, and the control module 202 and the thermal management module 203 are both connected to the container 10. The control module 202 is configured to perform electrical control on the battery cell 21, and the thermal management module 203 is configured to manage temperature of the battery cell 21. The size of the container 10 in the length direction X thereof is consistent with the size of the standard container in the length direction X, the size of the container 10 in the width direction Y thereof is consistent with the size of the standard container in the width direction Y, the size of one container 10 in the height direction Z is less than the size of the standard container in the height direction Z, and a sum of sizes of the two containers 10 in the height direction Z is equal to a sum of the size of one standard container in the height direction Z.

By arranging the control module 202, the control module 202 can control the input or output of electric energy of the battery cell 21, thereby achieving electric control over the battery cell 21. By arranging the thermal management module 203, the thermal management module 203 can manage the temperature of the battery cell 21, thereby reducing the risk of temperature runaway in the battery cell 21. The compartment body 201 can integrate the control module 202 and the thermal management module 203, thereby facilitating maintenance of the control module 202 and the thermal management module 203. By setting the size of the container 10 in the height direction Z to be less than the size of one standard container in the height direction Z, the size of the container 10 during transportation does not exceed the size of the corresponding standard container for sea or land transportation in the height direction Z of the container 10. This facilitates improving the convenience during transportation of the container 10. The size of the container 10 in the length direction X and the size of the container 10 in the width direction Y are both consistent with those of the standard container, thereby ensuring that a horizontal area occupied by the container 10 during transportation is consistent with that of the standard container. The sizes of two containers 10 in the height direction Z are the size of one standard container in the height direction Z, so that the space occupied by the two containers 10 when stacked is the same as that occupied by one standard container. This improves the utilization rate of the space where the container 10 is placed, helps to make full use of an available space in the height direction Z during transportation, reduces space waste during transportation of the container 10, and reduces the transportation costs of the container 10 and the energy storage apparatus 100 using the container 10, thereby reducing the use costs of the energy storage apparatus 100.

The above description merely provides preferred embodiments of the present application, and is not intended to limit the present application. For those skilled in the art, the present application may have various modifications and alterations. Any modification, equivalent replacement, improvement, and the like made within the spirit and principle of the present application shall fall within the scope of protection of the present application.

## Claims

1. An energy storage apparatus, comprising:
containers, wherein m containers are provided, m≥2, the m containers are arranged in a height direction of the container, the container comprises a container body and a plurality of battery cells, and the plurality of battery cells are accommodated in the container body; and
a control compartment, comprising a compartment body, a control module, and a thermal management module, wherein the control module and the thermal management module are accommodated in the compartment body, and the control module and the thermal management module are both connected to the container; and the control module is configured to perform electrical control on the battery cell, and the thermal management module is configured to manage temperature of the battery cell;
wherein a size of the container in a length direction thereof is consistent with a size of a standard container in the length direction, a size of the container in a width direction thereof is consistent with a size of the standard container in the width direction, a size of one container in the height direction is less than a size of the standard container in the height direction, and a sum of sizes of m1 containers in the m containers in the height direction is equal to a sum of sizes of n standard containers in the height direction.

2. The energy storage apparatus according to claim 1, wherein m1=2, and n=1; or, m1=3, and n=1; or, m1=3, and n=2.

3. The energy storage apparatus according to claim 1 or 2, wherein at least part of the control compartment and the container are arranged in the height direction.

4. The energy storage apparatus according to claim 3, wherein in the height direction, the control compartment is located between two adjacent containers or located at a bottom of a bottommost container.

5. The energy storage apparatus according to claim 3, wherein in the height direction, the control compartment is located at a top of a topmost container.

6. The energy storage apparatus according to claim 5, wherein in the height direction, the compartment body comprises a first top wall and a plurality of first side walls arranged around the first top wall, the first top wall and at least one first side wall are provided with a first vent, and the first vent is used for ventilation of the thermal management module.

7. The energy storage apparatus according to claim 6, wherein the compartment body comprises an isolation layer, the isolation layer divides the compartment body into a first compartment and a second compartment independent of each other, the first compartment is located at the top of the compartment body, the first compartment is configured to accommodate the thermal management module, and the second compartment is configured to accommodate the control module.

8. The energy storage apparatus according to any one of claims 5-7, wherein the control compartment comprises a first connector, and the first connector is electrically connected to the control module; each container comprises a second connector, and the second connector is electrically connected to the battery cell; and the first connector is configured to cooperate with each second connector.

9. The energy storage apparatus according to any one of claims 5-8, wherein a size of the compartment body in the length direction is consistent with the size of the standard container in the length direction, a size of the compartment body in the width direction is consistent with the size of the standard container in the width direction, and a size of the compartment body in the height direction is 1/p1 of the size of one standard container in the height direction, wherein p1 is a positive integer, and 2≤p1≤5.

10. The energy storage apparatus according to any one of claims 1-9, wherein the container comprises a plurality of batteries, and each battery comprises a thermal management component and a plurality of battery cells;
the control compartment further comprises a third connector, and the third connector is in communication with the thermal management module; each container further comprises a fourth connector and the thermal management component in communication with the fourth connector; and the third connector is configured to cooperate with each fourth connector.

11. The energy storage apparatus according to any one of claims 1-3, wherein the compartment body comprises a third compartment and a fourth compartment arranged separate from the third compartment, the thermal management module is accommodated in the third compartment, and the third compartment is located at the top of the topmost container;
the control module comprises a main control module, a power distribution module, a general control module, and a fire control module; the battery cell is electrically connected to the main control module, the main control module is electrically connected to the general control module, and the main control module, the general control module, and the fire control module are all electrically connected to the power distribution module; and the main control module is located in the fourth compartment, and at least one of the power distribution module, the general control module, and the fire control module is located in the third compartment.

12. The energy storage apparatus according to claim 11, wherein a size of the third compartment in the length direction is consistent with the size of the standard container in the length direction, a size of the third compartment in the width direction is consistent with the size of the standard container in the width direction, and a size of the third compartment in the height direction is 1/p2 of the size of one standard container in the height direction, wherein p2 is a positive integer, and 2≤p2≤5.

13. The energy storage apparatus according to claim 11 or 12, wherein the container body comprises the battery compartment, the battery cell is accommodated in the battery compartment, and the fourth compartment is located in the container body and arranged in the length direction with the battery compartment.

14. The energy storage apparatus according to claim 13, wherein in the length direction, the fourth compartment is formed at an end of the container body.

15. The energy storage apparatus according to claim 13 or 14, wherein the battery compartment has a first compartment door, the fourth compartment has a first access door, and the first compartment door and the first access door are located on a same side in the width direction.

16. The energy storage apparatus according to any one of claims 11-15, wherein the general control module is located in the third compartment;
the third compartment comprises a fifth connector, and the fifth connector is electrically connected to the general control module; each container comprises a sixth connector and the main control module electrically connected to the sixth connector; and the fifth connector is configured to cooperate with each sixth connector.

17. The energy storage apparatus according to claim 1 or 2, wherein at least part of the control compartment is hung on an outer container wall of at least one container body in the length direction or the width direction; or the control compartment and the container are arranged separate from each other and are connected.

18. The energy storage apparatus according to any one of claims 1-3, wherein the compartment body comprises a fifth compartment and a sixth compartment arranged separate from the fifth compartment, the thermal management module is accommodated in the fifth compartment, the fifth compartment is located at the top of the topmost container, and the control module is accommodated in the sixth compartment.

19. The energy storage apparatus according to claim 18, wherein the sixth compartment is located at the bottom of the bottommost container; or, the sixth compartment is located between two adjacent containers in the height direction.

20. The energy storage apparatus according to claim 18 or 19, wherein a size of the sixth compartment in the length direction is consistent with the size of the standard container in the length direction, a size of the sixth compartment in the width direction is consistent with the size of the standard container in the width direction, and a size of the sixth compartment in the height direction is 1/p3 of the size of one standard container in the height direction, where p3 is a positive integer, and 2≤p3≤5.

21. The energy storage apparatus according to any one of claims 18-20, wherein the sixth compartment comprises a seventh connector, and the seventh connector is electrically connected to the control module; each container comprises an eighth connector, and the eighth connector is electrically connected to the battery cell; and the seventh connector is configured to cooperate with each eighth connector.

22. The energy storage apparatus according to claim 18, wherein the container body comprises a battery compartment, the battery cell is accommodated in the battery compartment, the sixth compartment is located in the container body, and the sixth compartment is located at an end of the container body in the length direction.

23. The energy storage apparatus according to claim 22, wherein the sixth compartment has a second access door, and the second access door is located on the side of the container body in the length direction.

24. The energy storage apparatus according to any one of claims 1-10 and 17-21, wherein the container comprises a battery compartment and a wiring harness compartment, the plurality of battery cells are accommodated in the battery compartment, and the wiring harness compartment is located in the container body and arranged in the length direction with the battery compartment; and
the wiring harness compartment is provided with an opening, and at least part of a connecting wiring harness between the container and the control compartment passes through the opening.

25. The energy storage apparatus according to any one of claims 1-24, wherein the container comprises a plurality of batteries, the plurality of batteries are arranged in rows and columns, the plurality of batteries in each row are arranged in the length direction, and the plurality of batteries in each column are arranged in the height direction; each battery comprises the thermal management component and the plurality of battery cells; and
the container further comprises a main pipeline and a plurality of branch lines, the main pipeline is in communication with the thermal management module and each branch line, and each branch line is in communication with the thermal management components of the plurality of batteries in one column.

26. The energy storage apparatus according to any one of claims 1-25, wherein the container comprises a plurality of batteries, the plurality of batteries are arranged in rows and columns, the plurality of batteries in each row are arranged in the length direction, and the plurality of batteries in each column are arranged in the height direction; each battery comprises the thermal management component and the plurality of battery cells; and
the thermal management module comprises a pumping apparatus, a first heat exchanger, a compressor, a throttling apparatus, and a second heat exchanger; the pumping apparatus, the first heat exchanger, the thermal management component, and the pumping apparatus are sequentially connected to form a cooling circulation loop; and the compressor, the second heat exchanger, the throttling apparatus, the first heat exchanger, and the compressor are sequentially connected to form a coolant circulation loop.

27. The energy storage apparatus according to any one of claims 1-26, wherein the container comprises the battery cell arranged in the container body, with a weight of the single battery cell ranging from 5 kg to 60 kg.

28. The energy storage apparatus according to any one of claims 1-27, wherein a weight of the container is M, and M≤35 tons.

29. The energy storage apparatus according to any one of claims 1-28, wherein the weight of the container is M, and a total weight of the battery cells in the container body is M1, wherein (M1/M)×100%≥60%.

30. The energy storage apparatus according to claim 29, wherein (M1/M)×100%≥80%.

31. The energy storage apparatus according to any one of claims 1-30, wherein the weight of the container is M, and a plurality of batteries are arranged in the container body; and the battery comprises an accommodating box and the plurality of battery cells, the plurality of battery cells are accommodated in the accommodating box, and a total weight of the batteries is M2, wherein 70%≤(M2/M)×100%≤90%.

32. The energy storage apparatus according to any one of claims 1-31, wherein a volume of the container is V, and a total volume of the battery cells in the container body is V1, wherein (V1/V)×100%≥30%.

33. The energy storage apparatus according to claim 32, wherein (V1/V)×100%≥50%.

34. The energy storage apparatus according to any one of claims 1-33, wherein the volume of the container is V, and a plurality of batteries are arranged in the container body; and the battery comprises an accommodating box and a plurality of battery cells, the plurality of battery cells are accommodated in the accommodating box, and a total volume of the batteries is V2, wherein 50%≤(V2/V)×100%≤80%.

35. The energy storage apparatus according to any one of claims 1-9, wherein in the height direction, two adjacent containers are welded, clamped, or connected by a fastener; or
in the height direction, at least part of the control compartment and an adjacent container thereof are welded, clamped, or connected by a fastener.

36. The energy storage apparatus according to any one of claims 1-35, wherein the plurality of containers comprise a first container and a second container, the first container is located above the second container, a bottom of the first container is provided with a limiting pin, and a top of the second container is provided with a limiting hole, and the limiting pin is clamped in the limiting hole.

37. The energy storage apparatus according to claim 36, wherein the bottom of the first container is provided with a first limiting member, the first limiting member is provided with a limiting groove, the top of the second container is provided with a second limiting member, the second limiting member is provided with a limiting hole, and two ends of the limiting pin are respectively clamped in the limiting groove and the limiting hole.

38. The energy storage apparatus according to any one of claims 1-37, wherein in the height direction, heights of some containers of the m containers are not equal to heights of the other containers; or
sizes of the m containers in the height direction are equal.

39. The energy storage apparatus according to any one of claims 1-38, wherein the standard container is a 20-foot standard container, and a height of the standard container is 2896 mm, 2591 mm or 2438 mm.

40. A container, comprising a container body and battery cells, wherein the battery cell is accommodated in the container body, a size of the container in a length direction and a size of the container in a width direction are consistent with those of a standard container, and a size of the container in a height direction of the container is less than a size of one standard container in the height direction.

41. The container according to claim 40, wherein the size of the container in the height direction is 1/2 or 1/3 of the size of the standard container in the height direction.

42. An energy storage device, comprising:
the container according to claim 40 or 41; and
a control compartment, comprising a compartment body, a control module, and a thermal management module, wherein the control module is configured to perform electrical control on the battery cell, and the thermal management module is configured to manage the temperature of the battery cell; and
the compartment body and the container are arranged in the height direction of the container, the thermal management module and/or at least part of the control module are/is arranged in the compartment body, a size of the compartment body in a length direction thereof is consistent with a size of a standard container in the length direction, a size of the compartment body in a width direction thereof is consistent with a size of the standard container in the width direction, and a size of the compartment body in the height direction is 1/p of a size of the standard container in the height direction, wherein p is a positive integer, and 2≤p≤5.

43. The energy storage device according to claim 42, wherein part of the control module is arranged in the compartment body, while the remaining part of the control module is arranged in the container.

44. The energy storage device according to claim 42 or 43, wherein the control module comprises a main control module, a power distribution module, a general control module, and a fire control module, and the main control module, the general control module, and the fire control module are all electrically connected to the power distribution module.

45. An energy storage system, comprising:
a power conversion apparatus; and
the energy storage apparatus according to any one of claims 1-39, wherein the power conversion apparatus is configured to be electrically connected to a power generation apparatus and the energy storage apparatus; or
the energy storage device according to any one of claims 42-44, wherein the power conversion apparatus is configured to be electrically connected to a power generation apparatus and the energy storage device.

46. A charging network, comprising:
a charging pile; and
the energy storage apparatus according to any one of claims 1-39, wherein the energy storage apparatus is configured to provide electric energy for the charging pile; or
the energy storage device according to any one of claims 42-44, wherein the energy storage device is configured to provide electric energy for the charging pile.
